(19) Europäisches Patentamt
European Patent Office
Office européen des brevets

(11) EP 3 517 933 B1

## (12) EUROPEAN PATENT SPECIFICATION

(45) Date of publication and mention
of the grant of the patent:
**22.04.2026 Bulletin 2026/17**

(21) Application number: **17853185.1**

(22) Date of filing: **22.09.2017**

(51) International Patent Classification (IPC):
*G01N 21/17* (2006.01)    *B07C 5/10* (2006.01)
*B07C 5/34* (2006.01)    *G01B 11/30* (2006.01)
*B07C 5/342* (2006.01)

(52) Cooperative Patent Classification (CPC):
**B07C 5/10; B07C 5/34; B07C 5/342; G01B 11/30; G01N 21/17**

(86) International application number:
**PCT/JP2017/034385**

(87) International publication number:
**WO 2018/056417 (29.03.2018 Gazette 2018/13)**

## (54) SORTING DEVICE AND SORTING METHOD

SORTIERVORRICHTUNG UND SORTIERVERFAHREN

DISPOSITIF DE TRI ET PROCÉDÉ DE TRI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2016 JP 2016185878**

(43) Date of publication of application:
**31.07.2019 Bulletin 2019/31**

(73) Proprietor: **Kabushiki Kaisha Earthtechnica**
**Tokyo 101-0051 (JP)**

(72) Inventors:
• **TAKANAMI, Hirotoshi**
**Chiba, 2760022 (JP)**
• **KAMINOTA, Shigenori**
**Chiba, 2760022 (JP)**
• **UEHARA, Hirotaka**
**Hyogo, 6738666 (JP)**
• **Higashi, Kenichiro**
**Hyogo, 6738666 (JP)**
• **HANAWA, Yuki**
**Hyogo, 6738666 (JP)**
• **KOJIMA, Shogo**
**Hyogo, 6738666 (JP)**

(74) Representative: **Arnold & Siedsma**
**Bezuidenhoutseweg 57**
**2594 AC The Hague (NL)**

(56) References cited:
EP-A1- 1 416 265      WO-A1-2004/063744
JP-A- 2010 172 799    JP-A- 2014 132 433
JP-A- 2014 132 433    JP-A- 2014 167 430
JP-A- 2016 118 475    JP-A- 2016 118 475
JP-A- H02 303 578    JP-A- H06 106 091
US-A1- 2013 229 510

**Description**

Technical Field

The present invention mainly relates to a sorting device that sorts a shredded metal piece in accordance with an additive metal content percentage in the shredded piece.

Background Art

Conventionally, a metal such as a steel plate is crushed by a horizontal or vertical shredder or the like to be recycled, examples of the steel plate including an unnecessary steel plate generated in the course of manufacturing a product as exemplified by an automobile or a steel plate included in a product that proves to be unnecessary. The recycling can be for various purposes, one example of which is to be used as cast iron for a cast metal.

Recently, to enhance the strength of a steel plate, a metal such as manganese or chromium is added to the steel plate. Thus, a steel plate having such a metal (hereinafter, an additive metal) added thereto is more often served to recycling. Here, a steel plate containing a large amount of additive metal may sometimes not be suitable for use as cast iron. For example, a steel plate containing a large amount of manganese or chromium involves a risk that graphite may be less likely to precipitate at a time of solidification during casting or that a weak structure called chill may be generated.

Patent Literature 1 (PTL 1) discloses a method that enables a steel plate containing a large amount of manganese to be used for casting without any difficulty by adding sulfur, a rare earth metal, and the like, to the steel plate. In this method, however, sulfur, a rare earth metal, and the like need to be added, and consequently a composition of cast iron is changed, which makes it impossible to use a desired material for casting.

Patent Literature 2 (PTL 2) discloses a method that determines whether a shredded piece is a shredded piece resulting from a carbon steel or a shredded piece resulting from a special steel by measuring a three-dimensional shape of a surface of the shredded piece. To be specific, the determination is implemented by: counting the number of portions where the amount of change in height is large; and making a comprehensive judgement using the counted number as well as many kinds of measured values such as the weight, area, and length of the shredded piece. In PTL 2, a steel containing five elements of C, Si, Mn, P, and S in iron is referred to as a carbon steel, and a steel containing Cr, Ni, Mo, etc. added to the carbon steel is referred to as a special steel.

Citation List

Patent Literature

PTL 1: Japanese Patent Application Laid-Open No. 2003-171729
PTL 2: Japanese Patent Application Laid-Open No. 2016-118475

Summary of Invention

Technical Problem

The method of PTL 2, however, requires that many kinds of measured values be acquired, which makes a sensor configuration complicated, and moreover makes a computation processing complicated because a determination process using the many kinds of measured values needs to be performed. In this method, a process for concurrently making determinations on a plurality of shredded pieces is particularly complicated, and it is difficult to increase the number of shredded pieces to be processed concurrently. This is why this method has a low shredded piece sorting efficiency (the amount of sorting implemented per unit time). Accordingly, apparatus and method capable of sorting a shredded piece by detecting an additive metal content percentage with a simple method have been demanded. Such a problem is not unique to iron alloys alone, but other alloys (e.g., an aluminum alloy) also involve a similar problem.

The present invention has been made in view of the circumstances described above, and a primary object of the present invention is to provide a sorting device capable of sorting a shredded piece by detecting an additive metal content percentage with a simple method.

Solution to Problem

Problems to be solved by the present invention are as described above. Solutions to the problems and advantageous effects thereof will now be described.

A first aspect of the present invention provides a sorting device according to claim 1 or 6. The device sorts a shredded metal piece in accordance with an additive metal content percentage in the shredded piece, the sorting device having the following configuration. The sorting device includes an acquisition unit, an image processing unit, and a sorting unit. The acquisition unit acquires surface information that is information about a surface shape of the shredded piece. The image processing unit calculates a wrinkle percentage that is a percentage of a portion where wrinkle is generated among a surface of the shredded piece, based on the surface information acquired by the acquisition unit. The sorting unit sorts the shredded piece based on the wrinkle percentage detected by the image processing unit.

A second aspect of the present invention provides a sorting method according to claim 12, associated with claim 1, or claim 13, associated with claim 6. The sorting method being for sorting a shredded metal piece in accordance with an additive metal content percentage in the shredded piece, the method including the following steps. The sorting method includes an acquisition step, an image processing step, and a sorting step. In the acquisition step, surface information that is information about a surface shape of the shredded piece is acquired. In the image processing step, a wrinkle percentage that is a percentage of a portion where wrinkle is generated among a surface of the shredded piece is calculated based on the surface information acquired in the acquisition step. In the sorting step, the shredded piece is sorted based on the wrinkle percentage detected by the image processing step.

The inventors of the present application discovered that there is a correlation between the additive metal content percentage and the wrinkle percentage in the shredded piece surface. Using this correlation makes it possible to sort a shredded piece just by acquiring the surface information and obtaining the wrinkle percentage in the manner described above. Accordingly, the shredded piece can be sorted by detecting the additive metal content percentage with a simple method.

Advantageous Effects of Invention

The present invention can provide a sorting device that sorts a shredded piece in accordance with an additive metal content percentage and that is configured to exert a high sorting efficiency.

Brief Description of Drawings

[FIG. 1] A diagram showing a configuration of a sorting device according to a first embodiment.
[FIG. 2] A perspective view showing a laser beam emitted by a laser apparatus and a photographing position of a three-dimensional camera.
[FIG. 3] Flowcharts showing a process that a control unit executes at a time of sorting a shredded piece.
[FIG. 4] A diagram showing a thinning process that is performed to create a range image from a laser image.
[FIG. 5] A diagram for explanation of a second-order differential process.
[FIG. 6] A diagram showing range images and differential images of a shredded piece with a high Mn content and of a shredded piece with a low Mn content, respectively.
[FIG. 7] A diagram showing a range image and a binary image.
[FIG. 8] A diagram showing a configuration of a sorting device according to a second embodiment.
[FIG. 9] Flowcharts showing a process that a control unit executes at a time of sorting a shredded piece.
[FIG. 10] A diagram showing a first image acquired while lighting by a lower-surface lighting unit, and an image indicating a computation region of a shredded piece.
[FIG. 11] A diagram showing a second image acquired during lighting by an upper-surface lighting unit and side-surface lighting units, and an image resulting from an edge processing.
[FIG. 12] A diagram showing images resulting from an image processing for comparison, of which one is an image of a shredded piece with a high manganese content and the other is an image of a shredded piece with a low manganese content.
[FIG. 13] A diagram showing how lighting units are lighting when a first image is acquired and when a second image is acquired, in each of the second embodiment, a first variation of the second embodiment, and a second variation of the second embodiment.
[FIG. 14] A graph showing a relationship between the edge percentage and the Mn percentage in a shredded piece that is plated.
[FIG. 15] A graph showing a relationship between the edge percentage and the Mn percentage in a shredded piece that is not plated.
[FIG. 16] A diagram showing a configuration of a pre-sorting unit provided before a main sorting unit in a third embodiment.

**EP 3 517 933 B1**

[FIG. 17] A diagram showing a configuration of a pre-sorting unit according to a first variation of the third embodiment.
[FIG. 18] A diagram showing a configuration of a pre-sorting unit according to a second variation of the third embodiment.
[FIG. 19] A diagram showing a configuration of a pre-sorting unit according to a third variation of the third embodiment.

Description of Embodiments

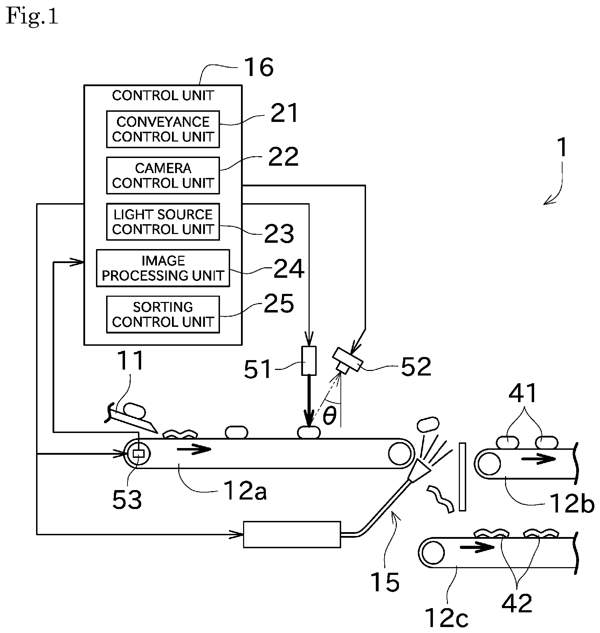

An example of a first embodiment according to claim 1 of the present invention will now be described with reference to the drawings. FIG. 1 is a diagram showing a configuration of a sorting device 1 according to the first embodiment of the present invention. In the descriptions below, upstream and downstream of a shredded piece conveyance direction will be simply referred to as upstream and downstream, for example.

As shown in FIG. 1, the sorting device 1 includes a feeding unit 11, a first conveyor unit 12a, a second conveyor unit 12b, a third conveyor unit 12c, a laser apparatus 51, a three-dimensional camera (acquisition unit) 52, a sorting unit 15, and a control unit 16.

The feeding unit 11 feeds a shredded piece to the first conveyor unit 12a, the shredded piece being obtained by a metal member (for example, a plate-shaped member) made of an iron alloy, an aluminum alloy, or the like, being processed with a horizontal or vertical shredder or the like. The feeding unit 11 may be a slope, or may be a belt conveyor. An upstream end portion of the feeding unit 11 is connected to an input port through which a shredded piece which has been processed and discharged from a horizontal or vertical shredder or the like is inputted. Instead of this configuration, the feeding unit 11 may be configured such that the upstream end portion of the feeding unit 11 is connected to a horizontal or vertical shredder or the like and the feeding unit 11 automatically feeds a shredded piece having been discharged from the horizontal or vertical shredder.

The first conveyor unit 12a conveys a shredded piece fed from the feeding unit 11 to the downstream side. While the shredded piece is being conveyed on a conveyor surface (measurement surface) of the first conveyor unit 12a, an additive metal content percentage in the shredded piece is measured. The second conveyor unit 12b and the third conveyor unit 12c are disposed downstream of the first conveyor unit 12a. Among shredded pieces conveyed by the first conveyor unit 12a, shredded pieces (in FIG. 1, shredded pieces 41 denoted by the reference sign 41) with low additive metal content percentages are sent to the second conveyor unit 12b. Among the shredded pieces conveyed by the first conveyor unit 12a, shredded pieces (in FIG. 1, shredded pieces 42 denoted by the reference sign 42) with high additive metal content percentages are sent to the third conveyor unit 12c. In this embodiment, each of the first to third conveyor units 12a to 12c is a belt conveyor that uses a pulley to drive a belt. Here, another configuration (a vibrating conveyor, a slope, etc.) may be acceptable as long as the configuration is able to convey shredded pieces. Instead of the above-described configuration, a configuration may be adoptable in which the shredded pieces 41 with low additive metal content percentages are sent to the third conveyor unit 12c while the shredded pieces 42 with high additive metal content percentages are sent to the second conveyor unit 12b.

In this embodiment, a pulley that drives a belt is provided with an encoder (motion detector) 53 that detects rotation of the pulley. Specifically, the encoder 53 detects the number of rotations and the angle of rotation of the pulley, and outputs them to the control unit 16. This enables the control unit 16 to grasp the amount by which the belt of the first conveyor unit 12a has moved. Here, it may be also acceptable that the encoder 53 is provided not in the pulley but in the belt so that the encoder 53 rotates along with movement of the belt to detect the amount of the movement (the amount of linear movement) of the belt.

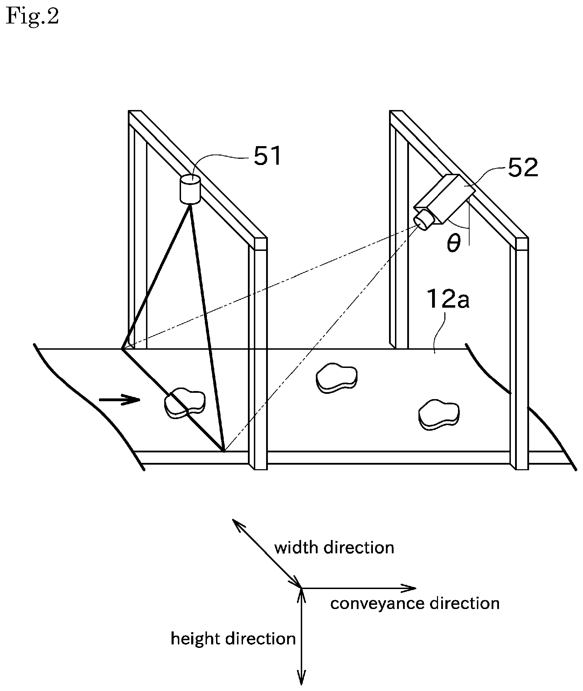

As shown in FIG. 2, the laser apparatus 51 is disposed above the first conveyor unit 12a. Specifically, the laser apparatus 51 is attached to a support base, and fixed against movement relative to the belt of the first conveyor unit 12a. The laser apparatus 51 radiates a laser beam from above a shredded piece toward the shredded piece located vertically below the laser apparatus 51 (toward the conveyor surface of the first conveyor unit 12a). The laser beam spreads in a width direction of the conveyor surface (in a direction perpendicular to the conveyance direction). Specifically, the laser apparatus 51 radiates a laser beam such that a radiated region of the conveyor surface has a line shape. The direction of this line is perpendicular to the conveyance direction. The radiated laser beam appears on the conveyor surface or on a surface of the shredded piece. Thus, if a shredded piece exists in a laser-beam irradiated region, the radiated laser beam appears at a position corresponding to the height of the shredded piece. In FIG. 2, one laser apparatus 51 radiates a laser beam that spreads from a first end to a second end of the first conveyor unit 12a. Instead, a configuration may be also adoptable in which a plurality of laser apparatuses 51 are arranged side by side in the width direction of the conveyor surface.

As shown in FIG. 2, the three-dimensional camera 52 is disposed downstream of the laser apparatus 51 and above the conveyor surface. Specifically, the three-dimensional camera 52 is attached to the support base, and fixed against movement relative to the belt of the first conveyor unit 12a. The three-dimensional camera 52 is attached in a tilted posture so as to acquire an image (hereinafter, a laser image) of a laser-beam irradiated region. Specifically, it is preferable that an angle θ formed between the axial direction (the direction in which an image is acquired) of the three-dimensional

4

camera 52 and the vertical direction is 10° to 35°. Here, instead of the three-dimensional camera 52, the laser apparatus 51 may be tilted relative to the vertical direction, or both the laser apparatus 51 and the three-dimensional camera 52 may be tilted relative to the vertical direction. The three-dimensional camera 52 may be disposed upstream of the laser apparatus 51.

Positions of the laser apparatus 51, the conveyor surface, and the three-dimensional camera 52 are given. Using the principle of triangulation allows the height of a portion irradiated with a laser beam to be calculated based on the position of the laser beam appearing on a laser image. In addition, a distribution of shredded piece heights can be detected by the three-dimensional camera 52 continuously acquiring laser images and calculating heights. In this embodiment, a laser image is acquired at every predetermined distance, based on a detection result obtained by the encoder 53. A detection result obtained by the encoder 53 is constantly stored and updated. Thus, for example, even if the sorting device 1 is temporarily stopped, a laser image can be acquired after elapse of a predetermined distance since a pre-stop laser image was acquired (the interval of acquisition of laser images can be maintained before and after the stop). Instead of acquiring a laser image at every predetermined distance, it may be acceptable to acquire a laser image at every predetermined time period.

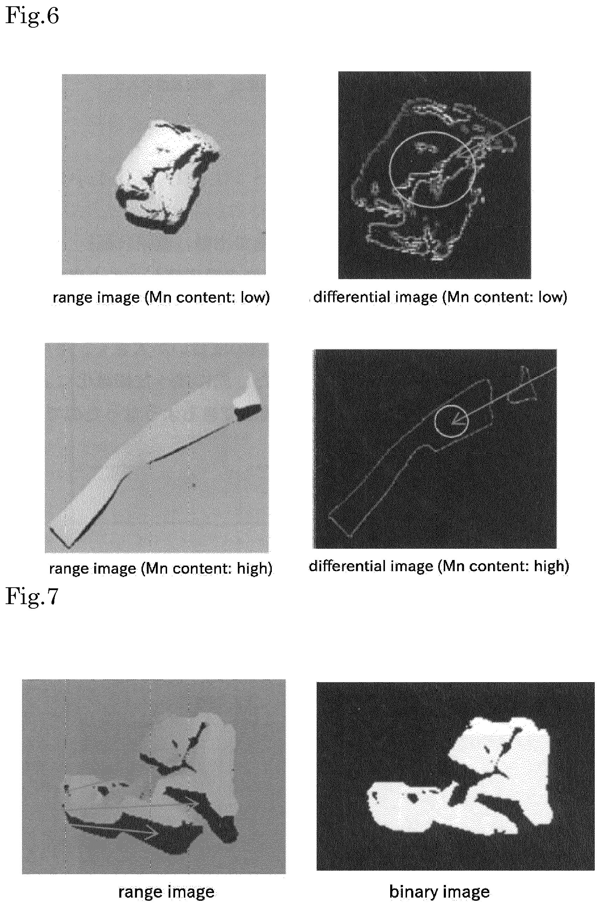

In this embodiment, a range image is created based on a height calculated based on a laser image. The range image is an image in which the luminance (or grayscale) varies depending not on colors but on heights, as shown in FIG. 6, etc., which will be described later. In an example shown in FIG. 6, a first side of a rectangular shape is along the conveyance direction, and a second side thereof is along the width direction. Setting is made such that the luminance decreases to whiten (to become pale) as the height increases. The range image is information concerning a shredded piece surface shape, and therefore corresponds to "surface information". The range image particularly indicates information of the height of a shredded piece surface, and therefore corresponds to "height information". A process of creating a range image from a laser image may be performed either by the three-dimensional camera 52 or by the control unit 16.

The sorting unit 15 is configured to switch whether a shredded piece conveyed on the first conveyor unit 12a is to be sent toward the second conveyor unit 12b or toward the third conveyor unit 12c. Specifically, the sorting unit 15 is configured to inject compressed air. If the sorting unit 15 injects compressed air, a shredded piece is blown by the compressed air, to be sent to the second conveyor unit 12b. If the sorting unit 15 injects no compressed air, a shredded piece falls down from the first conveyor unit 12a (in some cases, collides against a splitter that partitions the first conveyor unit 12a from the second conveyor unit 12b), to be sent to the third conveyor unit 12c. The sorting unit 15 may have another configuration to sort a shredded piece. For example, a configuration may be adoptable in which a movable guide plate is placed in a downstream end portion of the first conveyor unit 12a such that a shredded piece is guided to the second conveyor unit 12b when the guide plate is in a first position while a shredded piece is guided to the third conveyor unit 12c when the guide plate is in a second position. To send a shredded piece 42 having a high additive metal content percentage to the second conveyor unit 12b as mentioned above, the sorting unit 15 blows the shredded piece 42 with compressed air. Preferably, of a shredded piece 41 and a shredded piece 42, one whose expected absolute quantity is lower is blown by compressed air of the sorting unit 15, to be sent to the second conveyor unit 12b.

The control unit 16 is implemented by a computing device such as an FPGA, an ASIC, or a CPU. The control unit 16 is configured to execute various processes concerning the sorting device 1 by reading out and executing a program that has been prepared in advance. Although the following description deals with part of processes executed by the control unit 16, the control unit 16 is able to execute other processes, too.

The control unit 16 includes a conveyance control unit 21, a camera control unit 22, a light source control unit (lighting control unit) 23, an image processing unit 24, and a sorting control unit 25. The conveyance control unit 21 controls driving of the first conveyor unit 12a to third conveyor unit 12c. The camera control unit 22 controls operations (particularly an image-pickup timing) of the three-dimensional camera 52. The light source control unit 23 controls operations (particularly ON/OFF) of the laser apparatus 51. The image processing unit 24 performs an image processing on a range image acquired by the three-dimensional camera 52, for analysis. The sorting control unit 25 controls operations (whether or not to inject compressed air) of the sorting unit 15 in accordance with an analysis result obtained by the image processing unit 24.

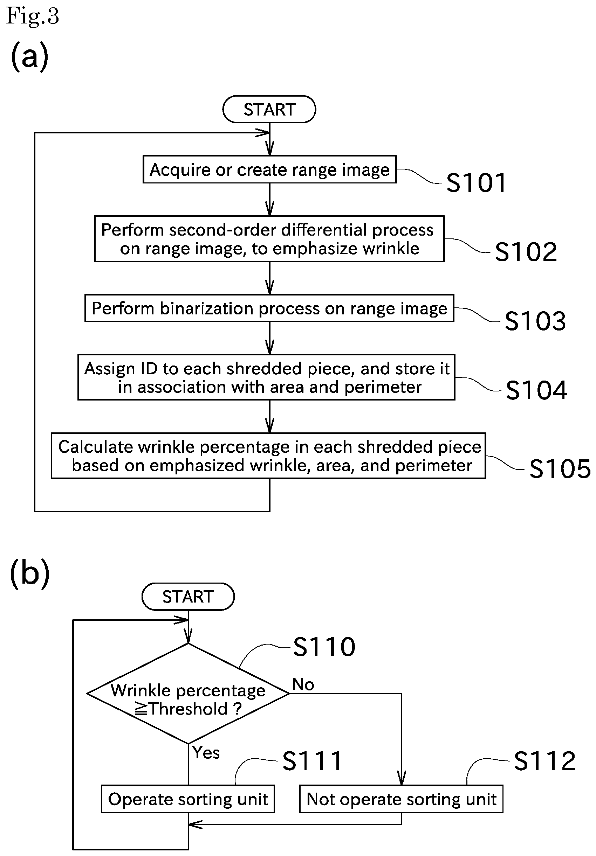

Next, referring to FIG. 3 to FIG. 7, a detailed description will be given to a specific control performed by the control unit 16, and particularly to a process of sorting a shredded piece based on a range image of a shredded piece.

As mentioned above, a purpose of recycling a shredded piece differs depending on the additive metal content percentage in the shredded piece. It however is not easy to obtain the additive metal content percentage in the shredded piece. Here, the additive metal is added mainly for the purpose of enhancing the strength of a metal (for example, a metal plate) made of iron, aluminum, or the like. Thus, a shredded piece with a higher additive metal content percentage has a relatively high strength, and is difficult to deform when processed with a horizontal or vertical shredder. A shredded piece with a lower additive metal content percentage has a relatively low strength, and is easy to deform when processed with a horizontal or vertical shredder. Specifically, when inputted to a horizontal or vertical shredder, an alloy with a lower additive metal content percentage is more bendable into a rounded shape. As a result, wrinkle is more likely to appear on a surface of the shredded piece. The sorting device 1 uses this characteristic, which has been discovered this time, to sort a shredded piece. A specific description will be given as follows.

FIG. 3(a) is a flowchart showing a process that the control unit 16 executes to sort a shredded piece. First, the control unit 16 (the camera control unit 22 and the light source control unit 23) acquires or creates a range image (S101; acquisition step). Specifically, the control unit 16 operates the laser apparatus 51 such that the laser apparatus 51 radiates a laser beam, and operates the three-dimensional camera 52 such that the three-dimensional camera 52 acquires a laser image. The control unit 16 acquires a range image that the three-dimensional camera 52 has created based on the laser image, or the control unit 16 acquires the laser image and creates a range image.

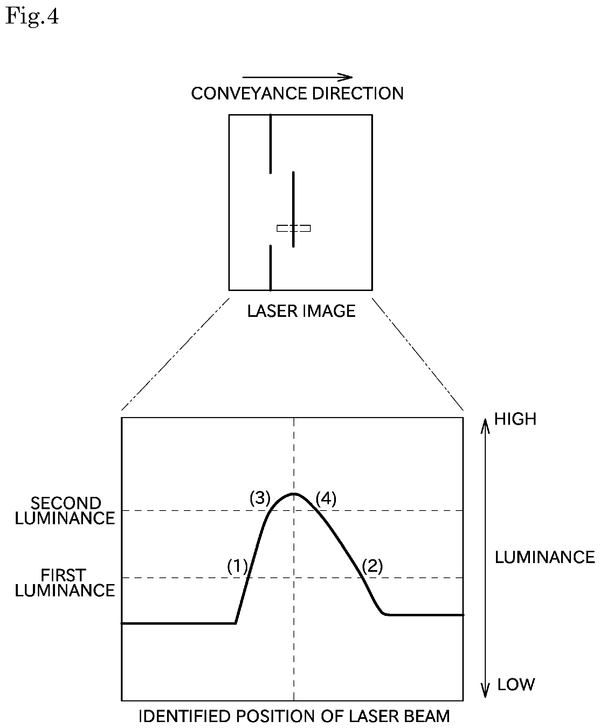

In this embodiment, a thinning process shown in FIG. 4 is performed in the creation of the range image, in order that the position of a laser beam in the laser image acquired by the three-dimensional camera 52 can be precisely obtained. In FIG. 4, the upper diagram shows a laser image acquired by the three-dimensional camera 52, in which the horizontal axis represents the position in the conveyance direction while the vertical axis represents the position in the direction perpendicular to the conveyance direction. In FIG. 4, the lower diagram is a diagram showing a process for precisely identifying the position of a laser beam appearing on the laser image, in which the horizontal axis represents the position in the conveyance direction while the vertical axis represents the luminance.

In this embodiment, a first luminance and a second luminance are set. The first luminance and the second luminance are set to be higher than the luminance of a portion irradiated with no laser beam and to be lower than the maximum luminance of a portion irradiated with a laser beam. To identify the precise position of the laser beam, this embodiment identifies two points (i.e., (1) and (2) in FIG. 4) where the luminance is coincident with the first luminance, and two points (i.e., (3) and (4) in FIG. 4) where the luminance is coincident with the second luminance. The average of the positions of these four points in the conveyance direction is obtained, to identify a laser-beam irradiated position. Using this method enables precise identification of the laser-beam irradiated position. As a result, the shape of a shredded piece surface can be identified with a good accuracy.

Then, the control unit 16 (the image processing unit 24) performs a second-order differential process on the range image, to detect wrinkle on the shredded piece surface (S103). In the second-order differential process which is one kind of the spatial filtering process, the luminance of a determination target portion which is a target where the presence or absence of wrinkle is to be determined is converted based on the luminance of the determination target portion and the luminance of a surrounding region. In this embodiment, the luminance of each pixel is converted, and therefore each determination target portion corresponds to one pixel. This pixel will be hereinafter referred to as a focused pixel. Thus, in this embodiment, the luminance of a focused pixel is converted based on the luminance of the focused pixel and the luminance of pixels (hereinafter, surrounding pixels) disposed around the focused pixel.

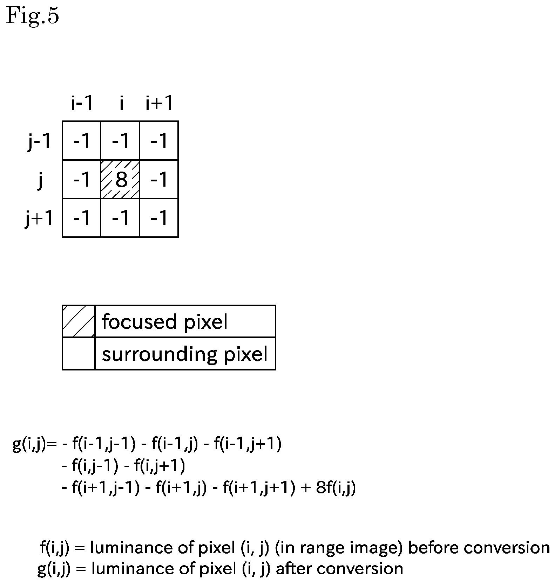

In this embodiment, as shown in FIG. 5, the surrounding pixels include eight pixels in total, namely, two pixels disposed above and below, two pixels disposed left and right, and four pixels (two pixels × 2) disposed diagonally in FIG. 5. In other words, pixels adjacent to the focused pixel in four directions along a plane (conveyor surface) perpendicular to the height direction are defined as the surrounding pixels.

To obtain a luminance after the conversion, the luminances of the respective surrounding pixels are multiplied by -1, and resultants are added to eight (the number of surrounding pixels) times the luminance of the focused pixel. In other words, differences of the respective surrounding pixels from the focused pixel are calculated and summed up. As a result of this process, a portion where a change in luminance is large (that is, a portion where a change in height is large) has its luminance increased, while a portion where a change in luminance is small (that is, a portion where a change in height is small) has its luminance decreased. This can emphasize the portion where a change in height is large. In a case of wrinkle generated on a shredded piece surface, a change in height is large, and therefore the wrinkle can be emphasized (detected) by performing a second-order differential process. For example, a portion where the luminance after conversion is equal to or greater than a predetermined threshold can be estimated to be a portion where wrinkle exist.

Although the surrounding pixels of this embodiment are eight pixels, it may also be acceptable that, for example, the surrounding pixels are four pixels excluding the diagonal direction for the process. Although the surrounding pixels of this embodiment are pixels adjacent to the focused pixel, it may also be acceptable that two pixels away from the focused pixel (that is, two pixels around the focused pixel) are included in the surrounding pixels for the process.

FIG. 6 shows range images and differential images of a shredded piece with a low Mn content and many wrinkle and of a shredded piece with a high Mn content and a little wrinkle, the differential images being obtained as a result of the second-order differential process. FIG. 6 reveals that a portion where wrinkle is generated is emphasized as a result of the second-order differential process. Here, a process other than the second-order differential process may also be adoptable as long as the process is able to emphasize a portion where a change in height is large from a range image.

Then, the control unit 16 (the image processing unit 24) performs a binarization process on the range image (S103). The binarization process is a process that: classifies pixels into pixels with a luminance higher than a luminance (reference luminance) serving as a reference and pixels with a luminance lower than the reference luminance; and creates an image (binary image) constituted by two kinds of luminances. In this embodiment, as shown in FIG. 7, pixels with a luminance higher than the reference luminance are drawn in white, while pixels with a luminance lower than the reference luminance are drawn in black. In this embodiment, the luminance of the conveyor surface (that is, the height of the conveyor surface) is set as the reference luminance. A shredded piece, which is placed on the conveyor surface, is at a position higher than the conveyor surface. Accordingly, setting the luminance of the conveyor surface as the reference luminance contributes to clear distinction between the conveyor surface and the shredded piece.

Then, the control unit 16 (the image processing unit 24) identifies a shredded piece, assigns an ID to each shredded piece, and stores it in association with its area and perimeter (S104). In the binary image obtained as a result of the binarization process, a shredded piece can be identified based on, for example, the shape and the position (e.g., the center position or the center-of-gravity position of the shredded piece in the range image) of the shredded piece. The control unit 16 assigns different IDs to respective shredded pieces identified. The IDs assigned to the shredded pieces are stored in a storage unit (not shown).

The binary image provides clear distinction between the conveyor surface and the shredded piece, and therefore it is possible to calculate the area and perimeter (the length of a boundary line between the shredded piece and the conveyor surface) of the shredded piece at the angle of the binary image (that is, at the angle of the range image). The area and perimeter thus calculated are associated with the ID of the shredded piece, and stored in the storage unit (not shown). If the area or perimeter is more than a predetermined upper limit threshold or less than a lower limit threshold, there is a high likelihood that something other than the shredded piece may be erroneously detected. In such a case, no ID is assigned, and nothing is registered as a shredded piece.

Then, the control unit 16 (the image processing unit 24) calculates a wrinkle percentage in each shredded piece based on the detected wrinkle, area, and perimeter (S105; image processing step). The wrinkle percentage is the percentage of a portion where wrinkle is generated among a shredded piece surface (to be exact, among a surface appearing on the range image). Here, the second-order differential process for emphasizing wrinkle emphasizes not only wrinkle of the shredded piece but also a boundary portion between the shredded piece and the conveyor surface. This boundary portion is excluded when obtaining the wrinkle percentage in accordance with claim 1. Specifically, the wrinkle percentage is calculated by using the following computational expression:

wrinkle percentage = (the area of a portion emphasized by the second-order differential process - the area corresponding to the perimeter) / (the area of the shredded piece).

Here, the area corresponding to the perimeter may be subtracted also from the area of the shredded piece.

Next, referring to FIG. 3(b), a brief description will be given to a process of sorting a shredded piece based on the wrinkle percentage which is stored in association with each shredded piece. FIG. 3(b) is a flowchart showing a process that the control unit 16 (sorting control unit 25) executes at a time of operating the sorting unit 15.

The control unit 16 (sorting control unit 25) determines whether or not a sorting target shredded piece which is conveyed on the first conveyor unit 12a has a wrinkle percentage equal to or more than a predetermined threshold (S110). This threshold may be preliminarily set in the sorting device 1, or may be changeable in accordance with setting made by an operator. Basically, as the additive metal content percentage in a shredded piece decreases, the shredded piece has a relatively decreased strength which makes wrinkle more likely to be generated so that the wrinkle percentage increases. Thus, by changing the threshold in accordance with a demanded additive metal content percentage, shredded pieces whose additive metal content percentages are not more than a predetermined value can be sorted out from all shredded pieces.

If the wrinkle percentage is equal to or more than the predetermined threshold, the control unit 16 (sorting control unit 25) operates the sorting unit 15 (S111), to send the shredded piece to the second conveyor unit 12b. If the wrinkle percentage is less than the predetermined threshold, the control unit 16 (sorting control unit 25) does not operate the sorting unit 15 (S112), to send the shredded piece to the third conveyor unit 12c. With such a configuration, a shredded piece can be sorted in accordance with its additive metal content percentage. In this embodiment, shredded pieces are sorted into two groups, but shredded pieces may be sorted into three or more groups. In an alternative configuration that sends shredded pieces 42 with high additive metal content percentages to the second conveyor unit 12b as mentioned above, the processings of steps S111 and S112 are inverted, and thereby the number of times the sorting unit 15 is operated can be reduced, so that energy consumption can be reduced.

A sorting device 1 according to an example of the second embodiment of claim 6 will now be described. In the descriptions below, members identical or similar to those of the first embodiment will be denoted by the same reference signs on the drawings, and their description may be omitted. The sorting device 1 according to the second embodiment does not include the laser apparatus 51 and the three-dimensional camera 52, but instead includes a camera 13, an upper-surface lighting unit 14a, two side-surface lighting units 14b, and a lower-surface lighting unit 14c. Any of the upper-surface lighting unit 14a, the side-surface lighting units 14b, and the lower-surface lighting unit 14c corresponds to "lighting unit".

The camera 13 picks up an image of a shredded piece that is conveyed on the first conveyor unit 12a from a predetermined direction, to acquire an external appearance image of the shredded piece. The external appearance image is an image (two-dimensional image, or photograph) including colors of the shredded piece. The external appearance image is information concerning a shredded piece surface shape, and therefore corresponds to "surface information". The external appearance image is different from the range image, and does not enable a shredded piece height to be grasped in detail. In this respect, however, a portion where the height changes (that is, a portion where wrinkle is generated) can be estimated by designing, for example, the way of lighting as follows. In this embodiment, the camera 13, which is disposed on the upper side of the first conveyor unit 12a, picks up an image of the first conveyor unit 12a from the upper side thereof, and thereby acquires an external appearance image of an upper surface of the first conveyor unit 12a. Alternatively, the camera 13 may be configured to pick up an image of a side surface of a shredded piece. Alternatively, the first conveyor unit 12a may be transparent, for example, so that the camera 13 picks up and image of a bottom surface of a shredded piece.

The upper-surface lighting unit 14a and the side-surface lighting units 14b radiate light to a surface of a shredded piece that is conveyed on the first conveyor unit 12a. In other words, the upper-surface lighting unit 14a and the side-surface lighting units 14b radiate light to a position that includes a region whose external appearance image is to be acquired by the camera 13. In this embodiment, the camera 13 is disposed on the upper side of the shredded piece, and therefore the upper-surface lighting unit 14a and the side-surface lighting units 14b radiate light to a position that includes an upper surface of the shredded piece.

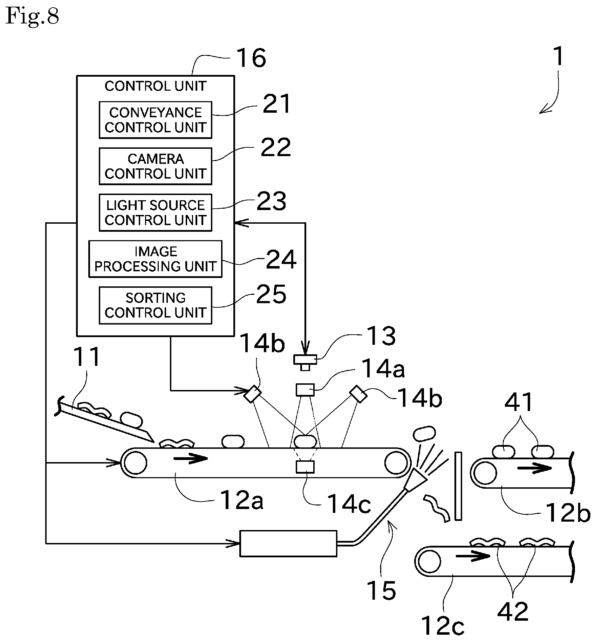

The upper-surface lighting unit 14a is disposed such that its position in the shredded piece conveyance direction overlaps the camera 13 in a side view (FIG. 8). The upper-surface lighting unit 14a radiates light downward in the vertical direction. The two side-surface lighting units 14b, which are disposed on the upstream and downstream sides of the camera 13, radiate light obliquely downward toward the shredded piece. Light radiated by the upper-surface lighting unit 14a and light radiated by the side-surface lighting units 14b overlap each other at a location below the camera 13. In this embodiment, the side-surface lighting units 14b are disposed on the upstream and downstream sides. Alternatively, the side-surface lighting units 14b may be disposed on the left and right sides when facing the downstream side in the shredded piece conveyance direction as the front side. At least either one of the upper-surface lighting unit 14a and the side-surface lighting units 14b may be omitted. The number of the upper-surface lighting units 14a and the number of the side-surface lighting units 14b may be different from the ones employed in this embodiment. External lighting (for example, lighting equipment installed in a factory where the sorting device 1 is located) may be employed.

The lower-surface lighting unit (back-surface lighting unit)14c radiates light to a back surface of a shredded piece that is conveyed on the first conveyor unit 12a. In other words, the lower-surface lighting unit 14c radiates light to a position that includes a region opposite to a region whose external appearance image is to be acquired by the camera 13. In this embodiment, the camera 13 is disposed on the upper side of the shredded piece, and therefore the lower-surface lighting unit 14c radiates light to a lower surface of the shredded piece. In order that light radiated by the lower-surface lighting unit 14c can reach the shredded piece, at least a portion of the first conveyor unit 12a above the lower-surface lighting unit 14c is given light transmission properties by, for example, having a transparent member or a hole. Although this embodiment has one lower-surface lighting unit 14c, two or more lower-surface lighting units 14c may be provided. Although this embodiment has the lower-surface lighting unit 14c disposed directly under the camera 13, the lower-surface lighting unit 14c may be disposed obliquely below the camera 13. The lower-surface lighting unit 14c is not an essential component of the sorting device **1,** and may be omitted (details will be given later).

In the second embodiment, the camera control unit 22 controls operations (particularly an image-pickup timing) of the camera 13. The light source control unit 23 controls operations (particularly ON/OFF) of the upper-surface lighting unit 14a, the side-surface lighting units 14b, and the lower-surface lighting unit 14c.

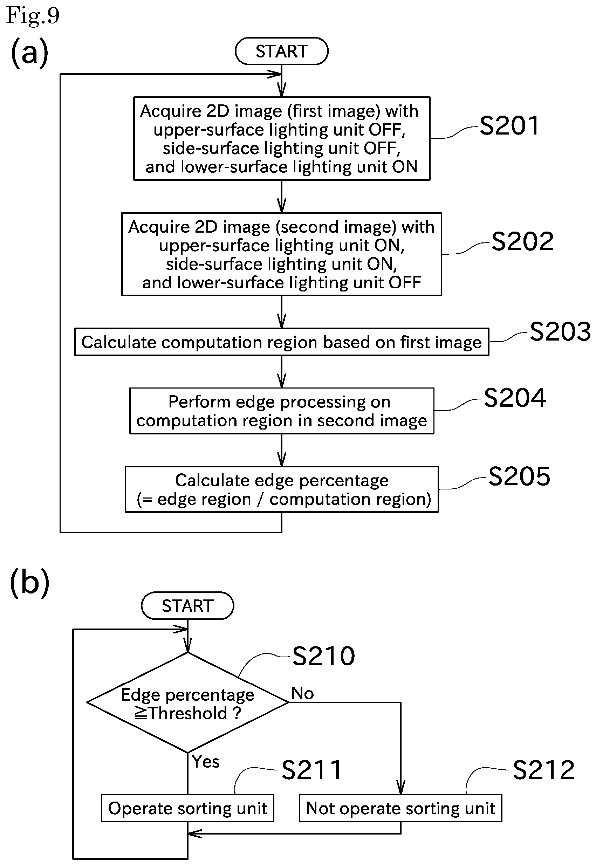

Now, referring to FIG. 9 to FIG. 12, a detailed description will be given to a specific control performed by the control unit 16, and particularly to details of an analysis performed by the image processing unit 24.

FIG. 9 is a flowchart showing a process that the control unit 16 executes at a time of sorting a shredded piece. This flowchart represents a process of sorting one shredded piece. This flowchart is merely an example, and it may be acceptable to change the order of steps, to add other steps, or to omit part of the steps. Shredded pieces are continuously fed to the sorting device 1, and each of the shredded pieces undergoes the process of FIG. 9.

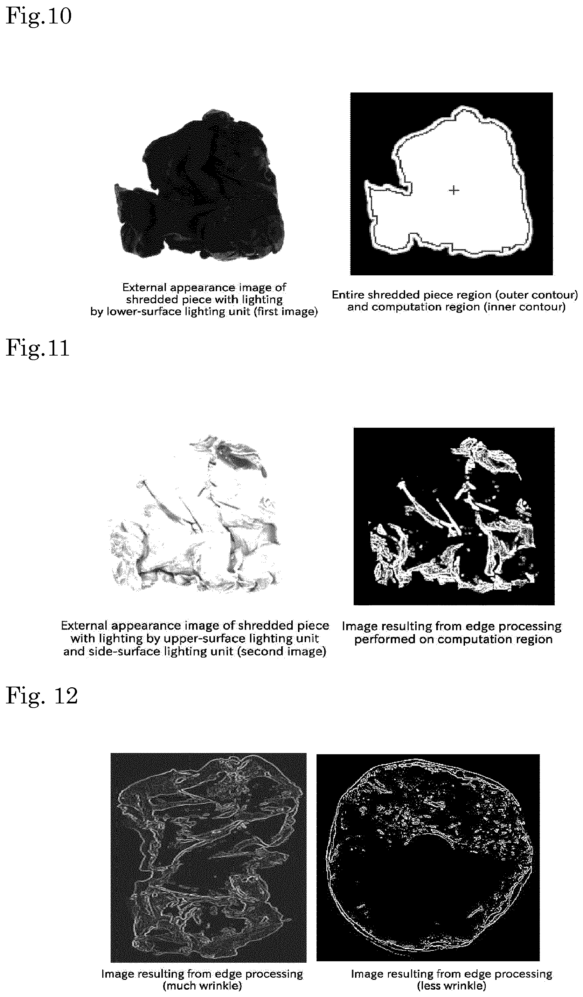

First, the control unit 16 (the light source control unit 23) turns on the lower-surface lighting unit 14c to radiate light therefrom, and additionally turns off the upper-surface lighting unit 14a and the side-surface lighting units 14b not to radiate light therefrom (S201). In this state, the control unit 16 (the camera control unit 22) directs the camera 13 to acquire an image (S201). An external appearance image acquired in step S201 will be referred to as a first image. As shown in the left image in FIG. 10, the first image is taken against light because light is radiated from the back side of a shredded piece. In the first image, therefore, a portion where the shredded piece exists is likely to be black irrespective of the shape of the shredded piece. In the first image, on the other hand, a portion where the shredded piece does not exist is likely to be white due to the light radiated by the lower-surface lighting unit 14c. If the configuration is not provided with the lower-surface lighting unit 14c, step S201 is omitted, and a second image which is acquired in later-described step S202 is used to perform steps S203 and S204.

Then, the control unit 16 (the light source control unit 23) turns off the lower-surface lighting unit 14c not to radiate light therefrom, and additionally turns on the upper-surface lighting unit 14a and the side-surface lighting units 14b to radiate light therefrom (S202). In this state, the control unit 16 (the camera control unit 22) directs the camera 13 to acquire an image (S202). An external appearance image acquired in step S202 will be referred to as a second image. As shown in FIG. 11, the second image is bright (whitish) as a whole because light is radiated to a surface of the shredded piece, but a portion where wrinkle is generated is distinguishable from a portion where they are not generated.

Preferably, the first image and the second image are acquired at the same angle and scaled down to the same extent. It therefore is preferable that the control unit 16 performs step S201 and step S202 in a short time. Alternatively, it may be acceptable that the control unit 16 (the conveyance control unit 21) stops the first conveyor unit 12a in a period after step S201 and before step S202.

Then, the control unit 16 (the image processing unit 24) calculates a computation region based on the first image acquired in step S201 (S203). Here, the computation region is a region for which the wrinkle percentage in the shredded piece is to be obtained (that is, a region for which computation is to be performed). Specifically, the control unit 16 performs an image processing on the first image, to identify pixels each having an image brightness equal to or higher than a predetermined threshold. As a result, an entire shredded piece region in the first image is obtained (see the right image in FIG. 10). The control unit 16 ignores a dark region having a predetermined size or less for example, in order to avoid identifying pixels that have low brightnesses at a location distant from the shredded piece, because such identification may otherwise occur due to noise or the like. Then, the control unit 16 calculates, as a computation region, a region a predetermined number of pixels inside the entire shredded piece region (see the right image in FIG. 10) in accordance with claim 6.

Then, the control unit 16 (the image processing unit 24) performs an edge processing on the computation region in the second image (S204). The edge processing is a processing of identifying an edge region in a single second image, the edge region being a region where the amount of change in image brightness is equal to or more than a predetermined value. Whether or not the amount of change in image brightness is equal to or more than the predetermined value is determined for each pixel. Not only pixels in which the amounts of change in image brightness are equal to or more than the predetermined value but also a few pixels surrounding them may be included in the edge region. Alternatively, it may be conceivable that: a predetermined number of pixels is defined as one unit region; the average value or the like of the brightnesses of the pixels belonging to the one unit region is obtained; and the average value or the like of the brightnesses (the brightness of the one unit region) is compared against the brightness of another unit region adjacent to the one unit region. The right image in FIG. 11 is an image resulting from the edge processing (a white portion corresponds to the edge region). As shown in FIG. 11, a region where the shredded piece surface has wrinkle is identified as the edge region as a result of the edge processing. In this manner, this embodiment identifies the edge region based on a distribution of brightnesses in one external appearance image.

Then, the control unit 16 (the image processing unit 24) calculates the edge percentage (edge region / computation region) (S205). Specifically, the control unit 16 obtains the edge percentage by dividing the area of the edge region calculated in step S204 by the area of the computation region calculated in step S203. That is, the edge percentage means the percentage of a region where wrinkle is generated in the entire shredded piece surface. In FIG. 12, the edge region is indicated with white color, which shows that the edge percentage increases as the wrinkle percentage increases.

In step S203, not the entire shredded piece region but the region the predetermined number of pixels inside the entire shredded piece region is set as the computation region. This is because an end portion (contour) of the shredded piece is inevitably included in the edge region and therefore, if the entire shredded piece was set as the computation region, the edge region (wrinkle percentage) would be determined to be a region larger than it actually is. In an unclaimed example, to simplify the computation processing, the entire shredded piece region may be set as the computation region.

Then, the control unit 16 (the image processing unit 24) determines whether or not the edge percentage is equal to or more than a predetermined threshold (S206). This threshold may be preliminarily set in the sorting device 1, or may be changeable in accordance with setting made by an operator. Basically, as the additive metal content percentage in a shredded piece decreases, the shredded piece has a relatively decreased strength which makes wrinkle more likely to be generated so that the edge percentage increases. Thus, by changing the threshold in accordance with a demanded additive metal content percentage, shredded pieces whose additive metal content percentages are not more than a predetermined value can be sorted out from all shredded pieces.

As shown in the flowchart of FIG. 3(b), the control unit 16 (sorting control unit 25) determines whether or not a sorting target shredded piece which is conveyed on the first conveyor unit 12a has an edge percentage equal to or more than a predetermined threshold (S210). If the edge percentage is equal to or more than the predetermined threshold, the control unit 16 operates the sorting unit 15 (S211), to send the shredded piece to the second conveyor unit 12b. If the edge percentage is less than the predetermined threshold, the control unit 16 does not operate the sorting unit 15 (S212), to send the shredded piece to the third conveyor unit 12c. With such a configuration, a shredded piece can be sorted in accordance with its additive metal content percentage. In this embodiment, shredded pieces are sorted into two groups, but shredded pieces may be sorted into three or more groups. In an alternative configuration that sends shredded pieces 42 with high additive metal content percentages to the second conveyor unit 12b as mentioned above, the processings of steps S211 and S212 are inverted.

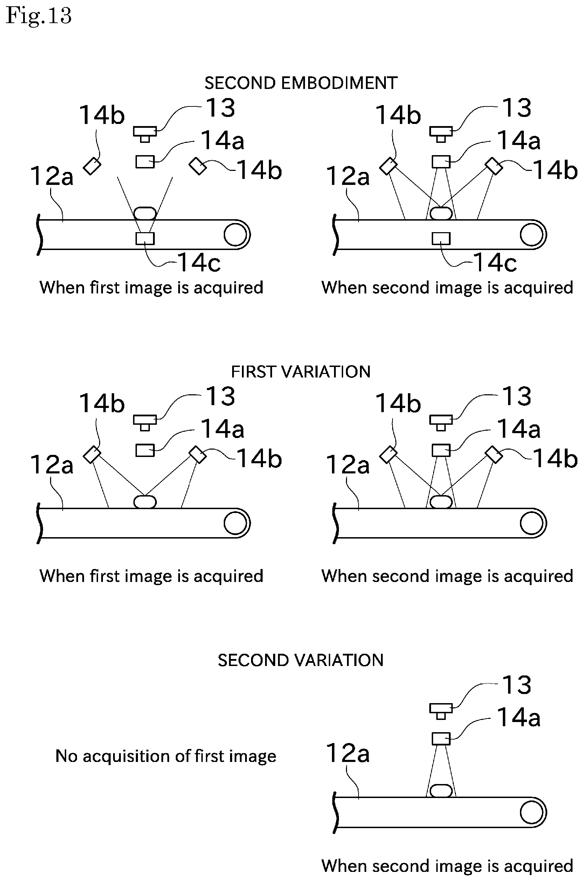

Next, variations having no lower-surface lighting unit 14c will be described with reference to FIG. 13. FIG. 13 is a diagram showing how lighting units are lighting when the first image is acquired and when the second image is acquired, in each of the second embodiment, a first variation of the second embodiment, and a second variation of the second embodiment. In the second embodiment, as shown in FIG. 13 and as described above, the lower-surface lighting unit 14c is turned on when the first image (the image for calculation of the computation region) is acquired, and the upper-surface lighting unit 14a and the side-surface lighting units 14b are turned on when the second image (the image for calculation of the edge region) is acquired.

On the other hand, a sorting device 1 according to the first variation of the second embodiment does not include the lower-surface lighting unit 14c. At a time of acquiring a first image, therefore, the side-surface lighting units 14b are turned on while the upper-surface lighting unit 14a is not turned on, for clarification of the contour of a shredded piece. At a time of acquiring a second image, the upper-surface lighting unit 14a and the side-surface lighting units 14b are turned on, similarly to the second embodiment. The first variation is different from the second embodiment only in the condition of the lighting units at a time of acquiring a first image. As for the process of calculating the edge percentage, the first variation adopts the same process as that of the second embodiment. Adoption of the configuration of the first variation eliminates the need of the lower-surface lighting unit 14c, and also does not require that the first conveyor unit 12a partially have light transmission properties.

As mentioned above, the positions and the numbers of lighting units disposed in the sorting device 1 have various patterns. Preferably, which of the lighting units is turned on at a time of acquiring a first image is different from that at a time of acquiring a second image.

A sorting device 1 according to the second variation of the second embodiment includes the upper-surface lighting unit 14a alone, as the lighting unit. In the second variation, the surface of the first conveyor unit 12a has a color different from a color of a shredded piece. This configuration enables the image processing unit 24 to recognize a boundary between the first conveyor unit 12a and the shredded piece even while the upper-surface lighting unit 14a is radiating light. In the second variation, therefore, a first image need not be acquired. Specifically, the processing in step S201 of FIG. 9 is unnecessary. In step S203, moreover, a computation region is calculated based on a second image. The configuration according to the second variation can reduce the number of times an image is acquired, while maintaining the sorting accuracy. Here, the sorting device 1 may be configured such that a member (e.g., a belt) of the surface of the first conveyor unit 12a is changeable depending on a shredded piece to be fed thereon.

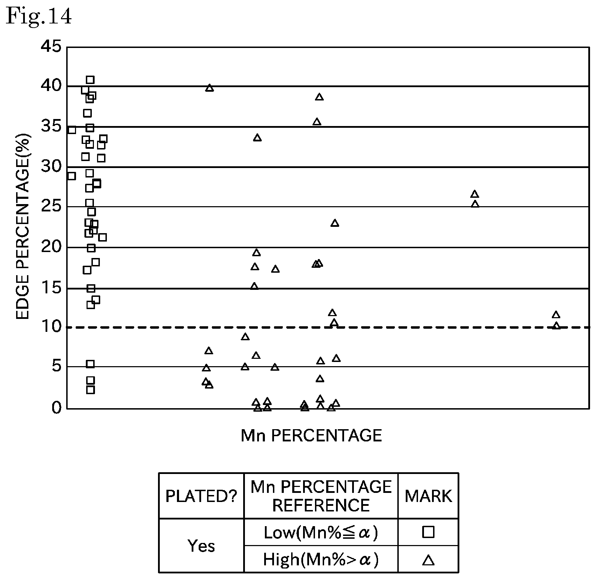

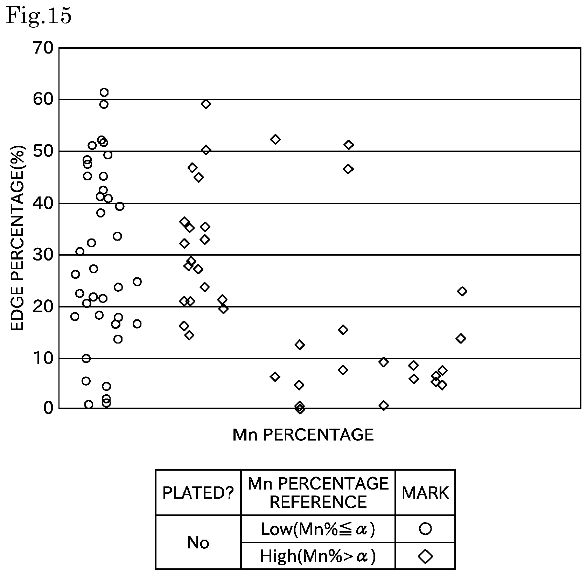

Next, referring to FIG. 14 and FIG. 15, a description will be given to results of experiments conducted for the purpose of seeing a correlation between the additive metal content percentage and the edge percentage. In the experiments, Mn was observed as the additive metal. Mn content percentages (Mn percentage) were classified into two groups on the basis of a predetermined reference value $\alpha$ as a reference. Shredded pieces whose Mn percentages were equal to or less than the reference value $\alpha$ were indicated as square marks (FIG. 14) and circle marks (FIG. 15). Shredded pieces whose Mn percentages were more than the reference value $\alpha$ were indicated as triangle marks (FIG. 14) and diamond marks (FIG. 15).

In an example shown in FIG. 14, for example, setting a threshold such that the edge percentage = 10% makes it possible to sort shredded pieces into shredded pieces with high Mn percentages and shredded pieces with low Mn percentages with a predetermined accuracy. It is known that the strength of a steel plate increases also when a metal (e.g., Cr) other than Mn is added thereto. It therefore would be reasonable to consider that a correlation occurs between the additive metal content percentage and the edge percentage also when a metal other than Mn is used.

In a case where a steel plate from which a shredded piece originates has a large thickness, it would be not easily rounded and to have wrinkle when processed with a horizontal or vertical shredder. In the experiments shown in FIG. 14 and FIG. 15, the thickness of a steel plate was not taken into account. Taking the thickness of a steel plate into account would result in a higher correlation. In a case where the thickness of a steel plate from which a shredded piece originates is known, for example, the thickness is inputted to the sorting device 1 so that the threshold can be adjusted with the thickness of the steel plate taken into account, which enables further enhancement of the sorting accuracy.

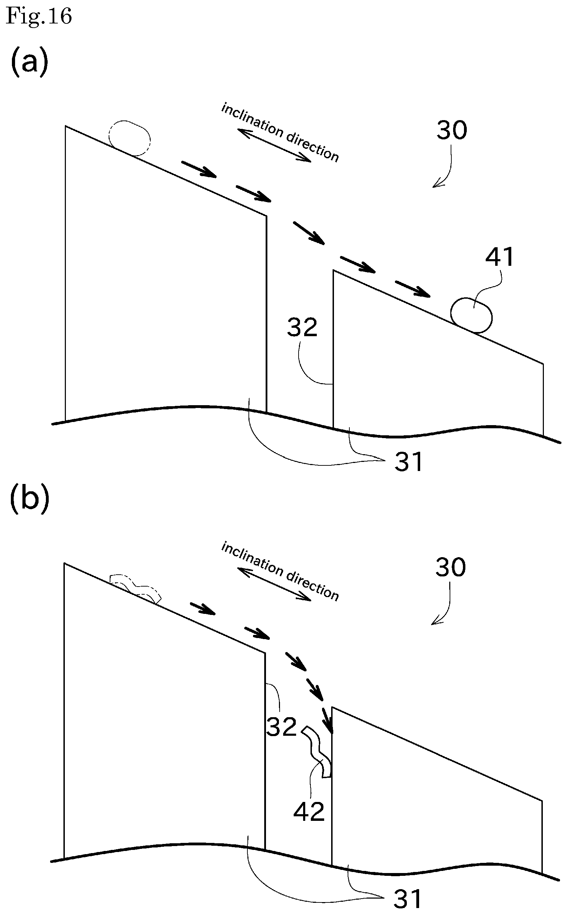

A third embodiment will now be described with reference to FIG. 16 to FIG. 19. The sorting device 1 according to the third embodiment further includes a pre-sorting unit 30 provided upstream of the feeding unit 11 to the control unit 16 (which will be collectively referred to as a main sorting unit) of the first or second embodiment. In FIG. 16 to FIG. 19, a shredded piece with a low additive metal content is denoted by the reference sign 41, while a shredded piece with a high additive metal content is denoted by the reference sign 42. Here, use of the pre-sorting unit 30 may not be limited to before the main sorting unit (that is, the pre-sorting unit 30 may be used independently). In the following descriptions of the third embodiment and variations thereof, a direction in which the gravity acts on slope portions 31, 35 will be referred to as an inclination direction, and a direction perpendicular to the inclination direction on the slope portion 35 will be referred to as a slope width direction, as shown in FIG. 16 to FIG. 19.

Each of the pre-sorting units 30 according to the third embodiment sorts a shredded piece based on a difference in speed of the shredded piece moving on a slope. Since each of the pre-sorting units 30 according to the third embodiment is configured to allow a shredded piece to move along the slope portion 31 or 35, the slope portion 31, 35 needs to be inclined with an angle greater than the angle of repose (that is, an angle that allows even an non-rounded shredded piece to slide spontaneously), in order that the shredded piece can reliably move along the slope portion 31, 35. Any configuration can be adoptable as long as the configuration is able to cause a shredded piece to reliably move along the slope portion 31, 35. For example, a configuration can be adoptable that vibrates a surface of the slope portion 31, 35 with a vibrator motor to cause a shredded piece to reliably move along the slope portion 31, 35. Preferably, a surface of the slope portion 31, 35 is made of a material with a low coefficient of friction such that a shredded piece can easily slide (for example, a rubber is not preferable).

FIG. 16 is a diagram showing the pre-sorting unit 30 according to the third embodiment. The pre-sorting unit 30 includes a slope portion 31. The slope portion 31 has, in a middle portion thereof, a slit portion 32 extending over a predetermined range in the inclination direction. As shown in FIG. 16(a), the shredded piece 41 with a low additive metal content is likely to have a high velocity component in the inclination direction, and therefore the shredded piece 41 is able to go over the slit portion 32. As shown in FIG. 16(b), the shredded piece 42 with a high additive metal content is less likely to have a high velocity component in the inclination direction, and therefore the shredded piece 42 is not able to go over the slit portion 32 and falls in the slit portion 32. In this manner, the pre-sorting unit 30 according to the third embodiment sorts a shredded piece by using such a characteristic that the shredded piece 42 with a high additive metal content is not easily rounded and thus its velocity component in the inclination direction is less likely to be higher than that of the shredded piece 41. A belt conveyor or the like (not shown) that conveys the shredded piece 41 or the shredded piece 42 to the main sorting unit is disposed at the lower end of the slope portion 31 or below the slit portion 32. An apparatus that conveys a shredded piece to the main sorting unit is not limited to a belt conveyor, and may be another slope portion, a vibrating conveyor, or the like. Alternatively, a stock part (for example, a stock place such as a stockyard, or a stock container such as a bin) that temporarily stores shredded pieces sorted by the pre-sorting unit 30 may be provided instead of a conveyance apparatus as exemplified by a belt conveyor or the like.

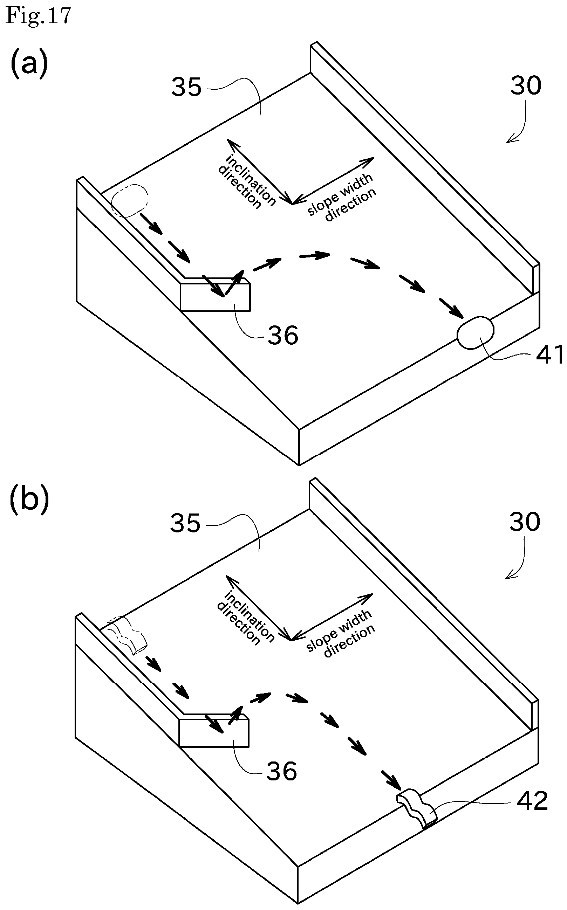

FIG. 17 is a diagram showing the pre-sorting unit 30 according to a first variation of the third embodiment. The pre-sorting unit 30 of the first variation includes a slope portion 35 and a guide portion 36. The guide portion 36 is disposed on the slope portion 31, and is inclined so as to extend more downstream in the inclination direction as it extends toward one side in the slope width direction. The upper end of the guide portion 36 in the inclination direction is located downstream of the upper end of the slope portion 35 in the inclination direction.

As shown in FIG. 17, the shredded piece 41 and the shredded piece 42 are fed to the slope portion 35 while colliding against the guide portion 36. The shredded piece 42 is likely to decrease in speed due to a larger frictional resistance force as compared to the shredded piece 41, and therefore the shredded piece 42 is likely to have a lower velocity component in the slope width direction at a time of collision against the guide portion 36 as compared to the shredded piece 41. As a result, the shredded piece 42 is likely to move in the slope width direction by a smaller movement amount as compared to the shredded piece 41. In this manner, the pre-sorting unit 30 according to the first variation of the third embodiment sorts a shredded piece.

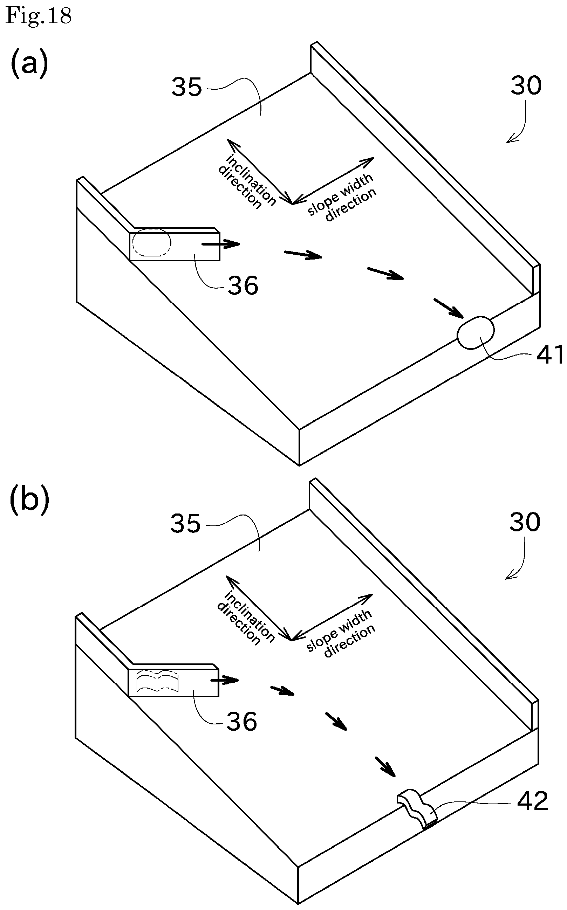

FIG. 18 is a diagram showing the pre-sorting unit 30 according to a second variation of the third embodiment. The pre-sorting unit 30 of the second variation includes a slope portion 35 and a guide portion 36. The guide portion 36 is disposed on the slope portion 31, and is inclined so as to extend more downstream on the slope portion 35 as it extends toward one side in the slope width direction. As shown in FIG. 18, the shredded piece 41 and the shredded piece 42 are fed to the slope portion 35 while moving along the guide portion 36. While moving along the guide portion 36, the shredded piece 42 is likely to decrease in speed due to a larger frictional resistance force as compared to the shredded piece 41, and therefore the shredded piece 42 is likely to have a lower velocity component in the slope width direction as compared to the shredded piece 41. As a result, the shredded piece 42 is likely to move in the slope width direction by a smaller movement amount as compared to the shredded piece 41. In this manner, the pre-sorting unit 30 according to the second variation of the third embodiment sorts a shredded piece. Here, it is preferable that the guide portion 36 of the second variation is longer than the guide portion 36 shown in FIG. 17 in order to provide a large speed difference between the shredded piece 41 and the shredded piece 42 in the slope width direction.

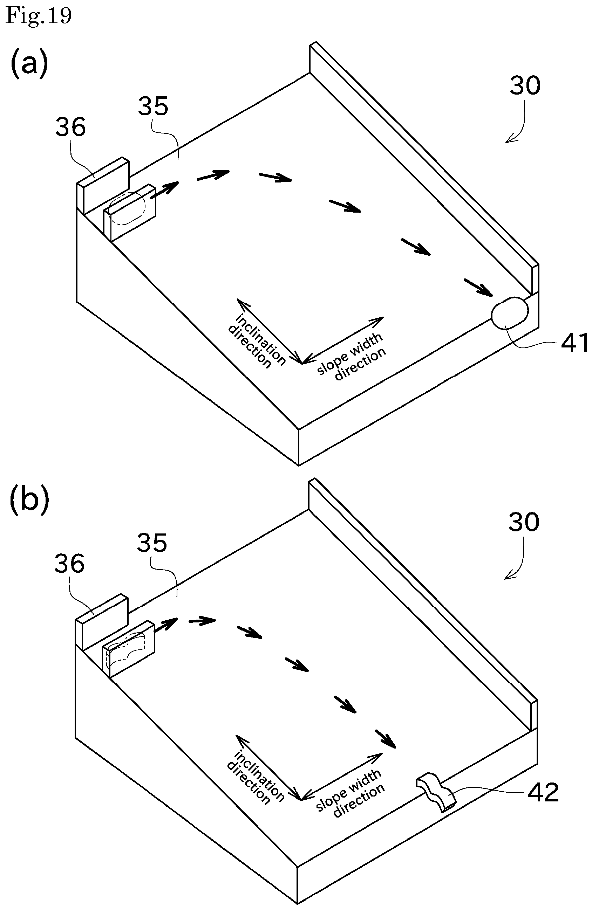

FIG. 19 is a diagram showing a pre-sorting unit 30 according to a third variation of the third embodiment. The pre-sorting unit 30 of the third variation includes a slope portion 35 and a guide portion 36. In the third variation, the shredded piece 41 and the shredded piece 42 are fed from the guide portion 36 to the slope portion 35 at the same speed in a direction parallel to the slope width direction. As shown in FIG. 19, the shredded piece 42 is likely to decrease in speed due to a larger frictional resistance force as compared to the shredded piece 41, and therefore the shredded piece 42 is likely to have a lower velocity component in the slope width direction as compared to the shredded piece 41. As a result, the shredded piece 42 is likely to move in the slope width direction by a smaller movement amount as compared to the shredded piece 41. In this manner, the pre-sorting unit 30 according to the third variation of the third embodiment sorts a shredded piece.

The first to third variations illustrated above sorts a shredded piece by using such a characteristic that the shredded piece 42 with a high additive metal content percentage has its velocity component in the slope width direction more likely to decelerate as compared to the shredded piece 41. In the first to third variations, a belt conveyor or the like disposed at a predetermined position in the slope width direction is provided near the downstream end of the slope portion 35 in the inclination direction, to guide the shredded piece 41 or the shredded piece 42 to the main sorting unit. In the first to third variations as well as the third embodiment, a conveyance apparatus other than a belt conveyor may be provided, or a stock part that stores shredded pieces may be provided.

As thus far described, the sorting device 1 according to the first to third embodiments includes the acquisition unit (the three-dimensional camera 52 or the camera 13), the image processing unit 24, and the sorting unit 15, and performs the following sorting method. The acquisition unit acquires surface information (a range image, an external appearance image) which is information about a surface shape of a shredded piece (acquisition step). The image processing unit 24 calculates the wrinkle percentage which is the percentage of a portion where wrinkle is generated among a surface of the shredded piece, based on the surface information acquired by the acquisition unit (image processing step). The sorting unit 15 sorts the shredded piece based on the wrinkle percentage detected by the image processing unit 24 (sorting step).

The inventors of the present application discovered that there is a correlation between the additive metal content percentage and the wrinkle percentage in the shredded piece surface. Using this correlation makes it possible to sort a shredded piece just by acquiring the surface information and obtaining the wrinkle percentage in the manner described above. Accordingly, the shredded piece can be sorted by detecting the additive metal content percentage with a simple method.

In the sorting device 1 according to the first embodiment, the three-dimensional camera 52 acquires, as the surface information, height information (and more specifically a range image) indicating the height corresponding to the position of the shredded piece surface.

Since a portion where wrinkle is generated has a change in height, use of the height information enables the wrinkle percentage to be calculated with a good accuracy.

In the sorting device 1 according to the first embodiment, the three-dimensional camera 52 acquires the height information about the shredded piece as viewed in one direction. Based on the height information, the image processing unit 24 calculates the area of the shredded piece as viewed in the one direction, and calculates the area of wrinkle in the shredded piece as viewed in the one direction, to calculate the wrinkle percentage based on these areas.

Since the wrinkle percentage is calculated by using the height information obtained in the one direction, the device configuration and the process are simplified as compared to using height information obtained in a plurality of directions. Moreover, the height information acquired by the same three-dimensional camera 52 is used to calculate both the area of the shredded piece and the area of wrinkle. This can reduce the number of components as compared to a configuration that uses detection results obtained by separate sensors to calculate the area and the area of wrinkle.

In the sorting device 1 according to the first embodiment, the image processing unit 24 calculates the wrinkle percentage by using a range image whose luminance is set in accordance with the height of the shredded piece surface.

Using the range image to perform the image processing enables the wrinkle percentage to be calculated through a simple process.

In the sorting device 1 according to the first embodiment, the first direction and the second direction (two directions out of the up-down direction, the left-right direction, and the two diagonal directions in FIG. 12) which are along a plane (the conveyor surface or the measurement surface of the first conveyor unit 12a) perpendicular to the height direction are set. A first difference which is a difference between the height of the determination target portion (focused pixel) and the height of a portion (surrounding pixel) adjacent to the determination target portion in the first direction is calculated. In addition, a second difference which is a difference between the height of the determination target portion and the height of a portion adjacent to the determination target portion in the second direction is calculated. The presence or absence of wrinkle in the determination target portion is determined based on the first difference and the second difference. Here, the determination target portion means a target where the presence or absence of wrinkle in the shredded piece is to be determined.

Since differences in height as compared to portions adjacent in at least two directions are detected, the presence or absence of wrinkle can be determined more precisely.

In the sorting device 1 according to the example of the first embodiment of claim 1, the three-dimensional camera 52 acquires the height information of the shredded piece placed on the measurement surface. The image processing unit 24 calculates the wrinkle percentage in a portion of the shredded piece excluding the boundary (pixels representing the perimeter) with the measurement surface.

This can prevent a difference in height between the shredded piece and the measurement surface from being handled as wrinkle, and thus enables the wrinkle percentage to be calculated with a higher accuracy.

The sorting device 1 according to the first embodiment includes the first conveyor unit 12a and the encoder 53. The first conveyor unit 12a conveys the shredded piece. The encoder 53 detects the amount of movement or rotation of the first conveyor unit 12a or of a member (pulley) moved integrally with the first conveyor unit 12a. The three-dimensional camera 52 is fixed against movement relative to the first conveyor unit 12a, and acquires the height information at a timing that is determined by a detection result obtained by the encoder 53.

With this configuration, the height information of the shredded piece can be acquired at regular intervals. In addition, the height information can be acquired at more precise intervals as compared to a configuration that determines a timing of acquiring height information on a time basis, because it is difficult to constantly keep the first conveyor unit 12a at a fixed speed.

In the sorting device 1 according to the example of the second embodiment of claim 6, the camera 13 acquires, as the surface information, the external appearance image indicating the external appearance of the shredded piece, by picking up an image of the shredded piece in a predetermined direction. The image processing unit 24 detects the wrinkle percentage based on a distribution of brightnesses in the external appearance image acquired by the camera 13.

Accordingly, the wrinkle percentage can be calculated with a simple configuration.

In the sorting device 1 according to the second embodiment, the image processing unit 24 performs the edge processing of identifying the edge region where the amount of change in brightness is equal to or more than a predetermined value in the external appearance image acquired by the camera 13, and detects the wrinkle percentage which is the percentage of wrinkle generated in the shredded piece surface based on the edge percentage which is the percentage of occurrence of the edge region in the shredded piece in the external appearance image. The sorting unit 15 sorts the shredded piece based on the edge percentage in the shredded piece.

Accordingly, the wrinkle percentage in the shredded piece surface (that is, the additive metal content percentage in the shredded piece) can be obtained by using the edge processing which is an ordinary method of image processing.

The sorting device 1 according to the second embodiment includes the plurality of lighting unit (the upper-surface lighting unit 14a, the side-surface lighting units 14b, and the lower-surface lighting unit 14c). The image processing unit 24 obtains the area of the shredded piece (the area of the computation region, which alternatively may be the area of the entire shredded piece region as mentioned above) in the external appearance image based on the external appearance image acquired by the camera 13, and detects the edge percentage based on the area of the shredded piece (and more specifically by calculating the computation region and thereby calculating the edge region / the computation region). In the sorting device 1, whether or not at least one of the lighting units is turned on at a time of acquiring an external appearance image (first image) for use in calculation of the edge region is different from whether or not the lighting unit is turned on at a time of acquiring an external appearance image (second image) for use in calculation of the area of the shredded piece.

With this configuration, the area of the entire shredded piece in the external appearance image can be obtained with a good accuracy, and therefore the wrinkle percentage in the shredded piece surface (that is, the additive metal content percentage in the shredded piece) can be obtained with a good accuracy, which can contribute to enhancement of the shredded piece sorting accuracy.

The sorting device 1 according to the second embodiment includes a surface lighting unit (the upper-surface lighting unit 14a and the side-surface lighting units 14b) that radiates light to a portion of the shredded piece, the portion including a position whose external appearance image is to be acquired by the camera 13. The image processing unit 24 detects the wrinkle percentage of wrinkle generated in the shredded piece surface based on the external appearance image that the camera 13 has acquired during radiation of light by the surface lighting unit.

This makes the wrinkle in the shredded piece surface more distinguishable from the rest of the shredded piece surface, which can contribute to enhancement of the shredded piece sorting accuracy.

The sorting device 1 according to each of the third embodiment and its variations illustrated above includes the pre-sorting unit 30 that sorts a shredded piece moved along the slope portion 31, 35 based on a difference in magnitude of a velocity component in the inclination direction or in the slope width direction. After sorted by the pre-sorting unit 30, the shredded piece is sorted by the main sorting unit (the camera 13, the image processing unit 24, and the sorting unit 15).

It was discovered that there is a correlation between the additive metal content percentage and the easiness of rounding the shredded piece. Accordingly, the shredded piece can be sorted by using the method of each of the third embodiment and its variations. This sorting method cannot increase the sorting accuracy so much, but can reduce the amount of shredded pieces fed to the main sorting unit which is disposed downstream, which allows the main sorting unit to be downsized. Particularly, a device of the main sorting unit costs high, and therefore downsizing the main sorting unit leads to reduction in cost of equipment.

In the sorting device 1 according to the third embodiment, the slope portion 31 of the pre-sorting unit 30 has the slit portion 32 that extends over a predetermined range in the inclination direction, and the shredded piece is sorted based on whether or not the shredded piece has fallen into the slit portion 32.

A shredded piece that can be easily rounded is likely to increase its speed while moving on the slope, and therefore is likely to go across the slit portion. Thus, the shredded piece can be sorted with a simple configuration. Moreover, the process of detecting the additive metal content percentage in a shredded piece and the process of sorting (for example, changing a route of) the shredded piece in accordance with a detection result can be performed at once. Thus, the shredded piece can be sorted efficiently.

In the sorting device 1 according to the first to third variations of the third embodiment illustrated above, the pre-sorting unit 30 allows a shredded piece to move along the slope portion 35 such that the shredded piece has a velocity component in the slope width direction, and sorts the shredded piece based on where the shredded piece is positioned in the slope width direction after moving along the slope portion 35.

The shredded piece 42 that cannot be easily rounded is likely to decrease its speed while moving on the slope, and therefore is likely to move in the horizontal direction by a smaller movement amount. Thus, the shredded piece can be sorted with a simple configuration. Moreover, the process of detecting the additive metal content percentage in a shredded piece and the process of sorting (for example, changing a route of) the shredded piece in accordance with a detection result can be performed at once. Thus, the shredded piece can be sorted efficiently. While the sorting method that uses the slit portion sorts shredded pieces into two groups, the method that uses the velocity component in the slope width direction can sort shredded pieces into two or more groups.

Although some preferred embodiments and variations of the present invention have been illustrated above, the above configurations can be modified, for example, as follows.

In the above configuration, a range image is created based on measured height information, and the range image is used to calculate a wrinkle percentage. Instead, the height information can be directly used to calculate the wrinkle percentage, without creation of the range image.

In the above configuration, a wrinkle percentage in the shredded piece surface is detected through the edge processing, but instead, another process (for example, a process of determining whether or not wrinkle is present based on the shape of a region represented by pixels whose brightnesses are not more than a predetermined value) can be used to detect the wrinkle percentage, as long as the process utilizes a distribution of brightnesses in the external appearance image.

Instead of the first conveyor unit 12a that conveys shredded pieces, a placement table for temporarily storing shredded pieces may be provided. Such a configuration involves a process of detecting a wrinkle percentage in each shredded piece stored on the placement table. It therefore is preferable that, for example, the camera 13 and the upper-surface lighting unit 14a are movable along the placement table or the camera 13 is disposed at a relatively upper position so that an external appearance image of every shredded piece placed on the placement table can be acquired. In this configuration, the sorting unit is preferably provided with an arm or the like for letting some of the shredded pieces placed on the placement table fall down from the placement table, the some of the shredded pieces being shredded pieces sorted in accordance with their wrinkle percentages.

Although the configuration illustrated above acquires the first image and the second image with the single camera 13, a camera for acquiring the first image and a camera for acquiring the second image may be separately provided.

In the third embodiment, various sorting methods are illustrated using such a characteristic that the shredded piece 42 with a high additive metal content is not easily rounded and thus its velocity component in the inclination direction is less likely to be higher than that of the shredded piece 41, or using such a characteristic that the shredded piece 42 has its velocity component in the slope width direction more likely to decelerate as compared to the shredded piece 41. Other sorting methods different from the above may also be adoptable.

Reference Signs List

| | |
|---|---|
| 1 | sorting device |
| 11 | feeding unit |
| 12a | first conveyor unit |
| 12b | second conveyor unit |
| 12c | third conveyor unit |
| 13 | camera (acquisition unit) |
| 14a | upper-surface lighting unit (surface lighting unit, lighting unit) |
| 14b | side-surface lighting unit (surface lighting unit, lighting unit) |
| 14c | lower-surface lighting unit (lighting unit) |
| 15 | sorting unit |
| 16 | control unit |
| 24 | image processing unit |
| 51 | laser apparatus |
| 52 | three-dimensional camera (acquisition unit) |
| 53 | encoder (motion detector) |

**Claims**

1. A sorting device (1) for sorting a shredded metal piece in accordance with an additive metal content percentage in the shredded piece, the sorting device (1) comprising:

an acquisition unit (52, 13) configured to acquire surface information that is information about a surface shape of the shredded piece;

an image processing unit (24) configured to calculate a wrinkle percentage that is a percentage of a portion where wrinkle is generated among a surface of the shredded piece, based on the surface information acquired by the acquisition unit (52, 13); and

a sorting unit (15) configured to sort the shredded piece based on the wrinkle percentage detected by the image processing unit (24), **characterized in that**

the acquisition unit (52) is configured to acquire, as the surface information, height information indicating a height corresponding to a position of a surface of the shredded piece,

the acquisition unit (52) is configured to acquire the height information of the shredded piece placed on a measurement surface, and

the image processing unit (24) is configured to calculate the wrinkle percentage in a portion of the shredded piece excluding a boundary with the measurement surface.

2. The sorting device (1) according to claim 1, wherein

the acquisition unit (52) is configured to acquire the height information about the shredded piece as viewed in one direction, and

based on the height information, the image processing unit (24) is configured to calculate an area of the shredded piece as viewed in the one direction, and to calculate an area of wrinkle in the shredded piece as viewed in the one direction, to calculate the wrinkle percentage based on the areas.

3. The sorting device (1) according to claim 1 or 2, wherein

the image processing unit (24) is configured to calculate the wrinkle percentage by using a range image whose luminance is set in accordance with a height of a surface of the shredded piece.

4. The sorting device (1) according to any one of claims 1 to 3, wherein

the image processing unit (24) is configured to:

set a first direction and a second direction that are along a plane perpendicular to a height direction;

calculate a first difference that is a difference between a height of a determination target portion and a height of a portion adjacent to the determination target portion in the first direction;

calculate a second difference that is a difference between the height of the determination target portion and a height of a portion adjacent to the determination target portion in the second direction; and

determine the presence or absence of wrinkle in the determination target portion based on the first difference and the second difference,

the determination target portion being a target where the presence or absence of wrinkle in the shredded piece is to be determined.

5. The sorting device (1) according to any one of claims 1 to 4, comprising:

a conveyor unit (12a) configured to convey the shredded piece; and

a motion detector (53) configured to detect the amount of movement or rotation of the conveyor unit (12a) or of a member moved integrally with the conveyor unit (12a),

the acquisition unit (52) being fixed against movement relative to the conveyor unit (12a) and being configured to acquire the height information at a timing that is determined by a detection result obtained by the motion detector (53).

6. A sorting device (1) for sorting a shredded metal piece in accordance with an additive metal content percentage in the shredded piece, the sorting device (1) comprising:

an acquisition unit (52, 13) configured to acquire surface information that is information about a surface shape of the shredded piece;

an image processing unit (24) configured to calculate a wrinkle percentage that is a percentage of a portion where wrinkle is generated among a surface of the shredded piece, based on the surface information acquired by the acquisition unit (52, 13); and

a sorting unit (15) configured to sort the shredded piece based on the wrinkle percentage detected by the image processing unit (24), **characterized in that**
the acquisition unit (13) is configured to acquire, as the surface information, one or more external appearance images indicating an external appearance of the shredded piece, by: either taking a first image of the shredded piece against light radiated from a back side of the shredded piece and taking a second image wherein light is radiated to the surface of the shredded piece, or taking the second image, and
the image processing unit (24) is configured to detect the wrinkle percentage based on a distribution of brightnesses in the second image acquired by the acquisition unit (13) within a computation region,
wherein the image processing unit (24) is configured to calculate the computation region as a region a predetermined number of pixels inside the entire shredded piece region of the shredded piece determined from an outer contour of the shredded piece in the first image or the second image.

7. The sorting device (1) according to claim 6, wherein

the image processing unit (24) is configured to perform an edge processing of identifying an edge region that is a region where the amount of change in brightness is equal to or more than a predetermined value in the external appearance image acquired by the acquisition unit, and to detect the wrinkle percentage based on an edge percentage that is a percentage of occurrence of the edge region in the shredded piece in the external appearance image, and
the sorting unit (15) is configured to sort the shredded piece based on the edge percentage in the shredded piece.

8. The sorting device (1) according to claim 7, comprising one or more lighting units (14a, 14b, 14c) that are configured to radiate light to the shredded piece, wherein

the image processing unit (24) is configured to calculates an area of the shredded piece in the external appearance image based on the external appearance image, and to detect the edge percentage based on the area of the shredded piece, and
whether or not at least one of the lighting units (14a, 14b, 14c) is turned on at a time of acquiring the external appearance image for use in calculation of the edge region is different from whether or not the lighting unit (14a, 14b, 14c) is turned on at a time of acquiring the external appearance image for use in calculation of the area of the shredded piece.

9. The sorting device according to claim 8, wherein

the lighting units (14a, 14b, 14c) include at least one surface lighting unit (14a, 14b, 14c) that is configured to radiate light to a portion of the shredded piece, the portion including a position of which the external appearance image is to be acquired by the acquisition unit (13), and
the image processing unit (24) is configured to detect the wrinkle percentage based on the external appearance image that the acquisition unit (13) acquires during radiation of light by the surface lighting unit (14a, 14b, 14c).

10. The sorting device (1) according to any one of claims 1 to 9, comprising

a pre-sorting unit (30) having a slope portion (31, 35) for sorting the shredded piece, and
a pre-sorting unit (30) configured to sort the shredded piece moved along the slope portion (31, 35), based on a difference in magnitude of a velocity component of the shredded piece in an inclination direction or in a slope width direction, where the inclination direction represents a direction in which the gravity acts on the slope portion (31, 35) of the pre-sorting unit (30), and the slope width direction represents a direction perpendicular to the inclination direction on the slope portion (31, 35), wherein
after being sorted by the pre-sorting unit (30), the shredded piece is sorted by the acquisition unit (52, 13), the image processing unit (24), and the sorting unit (15).

11. The sorting device (1) according to claim 10, wherein

the slope portion (31) of the pre-sorting unit has a slit portion (32) that extends over a predetermined range in the inclination direction, and the pre-sorting unit (30) is configured to sort the shredded piece based on whether or not the shredded piece has fallen into the slit portion (32),
or wherein
the pre-sorting unit (30) is configured to allow the shredded piece to move along the slope portion (35) such that the shredded piece has a velocity component in the slope width direction, and to sort the shredded piece based on where the shredded piece is positioned in the slope width direction after moving along the slope portion (35).

12. A sorting method for sorting a shredded metal piece in accordance with an additive metal content percentage in the shredded piece, the method comprising:

an acquisition step of acquiring surface information that is information about a surface shape of the shredded piece;
an image processing step of calculating a wrinkle percentage that is a percentage of a portion where wrinkle is generated among a surface of the shredded piece, based on the surface information acquired in the acquisition step; and
a sorting step of sorting the shredded piece based on the wrinkle percentage detected in the image processing step, **characterized in that**:

the acquisition step acquires, as the surface information, height information indicating a height corresponding to a position of a surface of the shredded piece;
the acquisition step acquires the height information of the shredded piece placed on a measurement surface, and
the image processing step calculates the wrinkle percentage in a portion of the shredded piece excluding a boundary with the measurement surface.

13. A sorting method for sorting a shredded metal piece in accordance with an additive metal content percentage in the shredded piece, the method comprising:

an acquisition step of acquiring surface information that is information about a surface shape of the shredded piece;
an image processing step of calculating a wrinkle percentage that is a percentage of a portion where wrinkle is generated among a surface of the shredded piece, based on the surface information acquired in the acquisition step; and
a sorting step of sorting the shredded piece based on the wrinkle percentage detected in the image processing step, **characterized in that**:

the acquisition step acquires, as the surface information, one or more external appearance images indicating an external appearance of the shredded piece, by: either taking a first image of the shredded piece against light radiated from a back side of the shredded piece and taking a second image wherein light is radiated to the surface of the shredded piece, or taking the second image; and
the image processing step detects the wrinkle percentage based on a distribution of brightnesses in the second image within a computation region, and calculates the computation region as a region a predetermined number of pixels inside the entire shredded piece region of the shredded piece determined from an outer contour of the shredded piece in the first image or the second image.

**Patentansprüche**

1. Sortiervorrichtung (1) zum Sortieren eines zerkleinerten Metallstücks entsprechend einem Additivmetallgehaltsanteil in dem zerkleinerten Stück, wobei die Sortiervorrichtung (1) umfasst:

eine Erfassungseinheit (52, 13), die konfiguriert ist, um Oberflächeninformationen zu erfassen, die Informationen über eine Oberflächenform des zerkleinerten Stücks sind;
eine Bildverarbeitungseinheit (24), die konfiguriert ist, um einen Faltenanteil zu berechnen, der ein Anteil eines Abschnitts ist, in dem Falten in einer Oberfläche des zerkleinerten Stücks erzeugt werden, basierend auf den Oberflächeninformationen, die von der Erfassungseinheit (52, 13) erfasst werden; und
eine Sortiereinheit (15), die konfiguriert ist, um das zerkleinerte Stück basierend auf dem von der Bildverarbeitungseinheit (24) erfassten Faltenanteil zu sortieren, **dadurch gekennzeichnet, dass**
die Erfassungseinheit (52) konfiguriert ist, um als Oberflächeninformationen Höheninformationen zu erfassen, die eine Höhe anzeigen, die einer Position einer Oberfläche des zerkleinerten Stücks entspricht,
die Erfassungseinheit (52) konfiguriert ist, um die Höheninformation des auf einer Messoberfläche platzierten zerkleinerten Stücks zu erfassen, und
die Bildverarbeitungseinheit (24) konfiguriert ist, um den Faltenanteil in einem Abschnitt des zerkleinerten Stücks unter Ausschluss einer Grenze zur Messoberfläche zu berechnen.

2.  Sortiervorrichtung (1) nach Anspruch 1, wobei

die Erfassungseinheit (52) konfiguriert ist, um die Höheninformation über das in einer Richtung betrachtete zerkleinerte Stück zu erfassen, und
die Bildverarbeitungseinheit (24) konfiguriert ist, um basierend auf den Höheninformationen eine Fläche des in der einen Richtung betrachteten zerkleinerten Teils zu berechnen und eine Fläche von Falten in dem in der einen Richtung betrachteten zerkleinerten Stücks zu berechnen, um den Faltenanteil auf Basis der Flächen zu berechnen.

3.  Sortiervorrichtung (1) nach Anspruch 1 oder 2, wobei:
die Bildverarbeitungseinheit (24) konfiguriert ist, um den Faltenanteil unter Verwendung eines Bereichsbildes zu berechnen, dessen Luminanz entsprechend einer Höhe einer Oberfläche des zerkleinerten Stücks eingestellt ist.

4.  Sortiervorrichtung (1) nach einem der Ansprüche 1 bis 3, wobei
die Bildverarbeitungseinheit (24) dazu konfiguriert ist:

eine erste Richtung und eine zweite Richtung festzulegen, die entlang einer Ebene senkrecht zu einer Höhenrichtung verlaufen;
eine erste Differenz zu berechnen, die eine Differenz zwischen einer Höhe eines Bestimmungszielabschnitts und einer Höhe eines dem Bestimmungszielabschnitt in der ersten Richtung benachbarten Abschnitts ist;
eine zweite Differenz zu berechnen, die eine Differenz zwischen der Höhe eines Bestimmungszielabschnitts und einer Höhe eines dem Bestimmungszielabschnitt in der zweiten Richtung benachbarten Abschnitts ist; und
das Vorhandensein oder Fehlen von Falten in dem Bestimmungszielabschnitt basierend auf der ersten Differenz und der zweiten Differenz zu bestimmen,
wobei der Bestimmungszielabschnitt ein Ziel ist, wo das Vorhandensein oder Fehlen von Falten in dem zerkleinerten Stück bestimmt werden soll.

5.  Sortiervorrichtung (1) nach einem der Ansprüche 1 bis 4, umfassend:

eine Fördereinheit (12a), die konfiguriert ist, um das zerkleinerte Stück zu befördern; und
einen Bewegungsdetektor (53), der konfiguriert ist, um das Ausmaß der Bewegung oder Rotation der Fördereinheit (12a) oder eines Glieds zu detektieren, das integral mit der Fördereinheit (12a) bewegt wird,
wobei die Erfassungseinheit (52) gegen eine Bewegung relativ zu der Fördereinheit (12a) fixiert ist und konfiguriert ist, um die Höheninformationen zu einem Zeitpunkt zu erfassen, der durch ein von dem Bewegungsdetektor (53) erhaltenes Detektionsergebnis bestimmt wird.

6.  Sortiervorrichtung (1) zum Sortieren eines zerkleinerten Metallstücks entsprechend einem Additivmetallgehaltsanteil in dem zerkleinerten Stück, wobei die Sortiervorrichtung (1) umfasst:

eine Erfassungseinheit (52, 13), die konfiguriert ist, um Oberflächeninformationen zu erfassen, die Informationen über eine Oberflächenform des zerkleinerten Stücks sind;
eine Bildverarbeitungseinheit (24), die konfiguriert ist, um einen Faltenanteil zu berechnen, der ein Anteil eines Abschnitts ist, in dem Falten in einer Oberfläche des zerkleinerten Stücks erzeugt werden, basierend auf den Oberflächeninformationen, die von der Erfassungseinheit (52, 13) erfasst werden; und
eine Sortiereinheit (15), die konfiguriert ist, um das zerkleinerte Stück basierend auf dem von der Bildverarbeitungseinheit (24) erfassten Faltenanteil zu sortieren, **dadurch gekennzeichnet, dass**
die Erfassungseinheit (13) konfiguriert ist, um als die Oberflächeninformationen ein oder mehrere äußere Erscheinungsbilder, die eine äußere Erscheinung des zerkleinerten Stücks anzeigen, zu erfassen durch entweder Aufnehmen eines ersten Bildes des zerkleinerten Stücks gegen Licht, das von einer Rückseite des zerkleinerten Stücks abgestrahlt wird, und Aufnehmen eines zweiten Bildes, wobei Licht auf die Oberfläche des zerkleinerten Stücks abgestrahlt wird, oder durch Aufnehmen des zweiten Bildes, und
dass die Bildverarbeitungseinheit (24) konfiguriert ist, um den Faltenanteil basierend auf einer Verteilung von Helligkeiten in dem zweiten Bild zu detektieren, das von der Erfassungseinheit (13) innerhalb eines Berechnungsbereichs erfasst wird,
wobei die Bildverarbeitungseinheit (24) konfiguriert ist, um den Berechnungsbereich als einen Bereich einer vorgegebenen Anzahl von Pixeln innerhalb des gesamten Bereichs zerkleinerter Stücke des zerkleinerten Stücks zu berechnen, abgeleitet aus einem äußeren Umriss des zerkleinerten Stücks in dem ersten Bild oder dem zweiten Bild.

7. Sortiervorrichtung (1) nach Anspruch 6, wobei

die Bildverarbeitungseinheit (24) konfiguriert ist, um eine Kantenverarbeitung zum Identifizieren eines Kantenbereichs durchzuführen, der ein Bereich ist, wo die Änderungsmenge der Helligkeit gleich oder größer als ein vorgegebener Wert in dem von der Erfassungseinheit erfassten äußeren Erscheinungsbild ist, und den Faltenanteil basierend auf einem Kantenanteil zu detektieren, der ein Häufigkeitsanteil des Kantenbereichs in dem zerkleinerten Stück in dem äußeren Erscheinungsbild ist, und
die Sortiereinheit (15) konfiguriert ist, um das zerkleinerte Stück basierend auf dem Kantenanteil in dem zerkleinerten Stück zu sortieren.

8. Sortiervorrichtung (1) nach Anspruch 7, umfassend eine oder mehrere Beleuchtungseinheiten (14a, 14b, 14c), die konfiguriert sind, um Licht auf das zerkleinerte Stück zu strahlen, wobei

die Bildverarbeitungseinheit (24) konfiguriert ist, um eine Fläche des zerkleinerten Stücks in dem äußeren Erscheinungsbild auf Basis des äußeren Erscheinungsbilds zu berechnen und den Kantenanteil auf Basis der Fläche des zerkleinerten Stücks zu detektieren, und
ob mindestens eine der Beleuchtungseinheiten (14a, 14b, 14c) zu einem Zeitpunkt des Erfassens des äußeren Erscheinungsbildes zur Verwendung beim Berechnen des Kantenbereichs eingeschaltet ist oder nicht, sich davon unterscheidet, ob die Beleuchtungseinheit (14a, 14b, 14c) zu einem Zeitpunkt des Erfassens des äußeren Erscheinungsbildes zur Verwendung beim Berechnen der Fläche des zerkleinerten Stücks eingeschaltet ist oder nicht.

9. Sortiervorrichtung nach Anspruch 8, wobei

die Beleuchtungseinheiten (14a, 14b, 14c) mindestens eine Oberflächenbeleuchtungseinheit (14a, 14b, 14c) umfassen, die konfiguriert ist, um Licht auf einen Abschnitt des zerkleinerten Stücks zu strahlen, wobei der Abschnitt eine Position einschließt, von der das äußere Erscheinungsbild durch die Erfassungseinheit (13) erfasst werden soll, und
die Bildverarbeitungseinheit (24) konfiguriert ist, um den Faltenanteil auf Basis des äußeren Erscheinungsbilds zu detektieren, das die Erfassungseinheit (13) während der Lichtstrahlung durch die Oberflächenbeleuchtungseinheit (14a, 14b, 14c) erfasst.

10. Sortiervorrichtung (1) nach einem der Ansprüche 1 bis 9, umfassend

eine Vorsortiereinheit (30) mit einem Neigungsabschnitt (31, 35) zum Sortieren des zerkleinerten Stücks, und eine Vorsortiereinheit (30), die konfiguriert ist, um das entlang des Neigungsabschnitts (31, 35) bewegte zerkleinerte Stück basierend auf einem Unterschied in der Größe einer Geschwindigkeitskomponente des zerkleinerten Stücks in einer Inklinationsrichtung oder in einer Neigungsbreitenrichtung zu sortieren, wobei die Inklinationsrichtung eine Richtung darstellt, in der die Schwerkraft auf den Neigungsabschnitt (31, 35) der Vorsortiereinheit (30) wirkt, und die Neigungsbreitenrichtung eine Richtung senkrecht zur Inklinationsrichtung auf dem Neigungsabschnitt (31, 35) darstellt, wobei
das zerkleinerte Stück, nachdem dieses durch die Vorsortiereinheit (30) sortiert wurde, durch die Erfassungseinheit (52, 13), die Bildverarbeitungseinheit (24) und die Sortiereinheit (15) sortiert. wird.

11. Sortiervorrichtung (1) nach Anspruch 10, wobei

der Neigungsabschnitt (31) der Vorsortiereinheit einen Schlitzabschnitt (32) aufweist, der sich über einen vorgegebenen Bereich in der Inklinationsrichtung erstreckt, und die Vorsortiereinheit (30) konfiguriert ist, um das zerkleinerte Stück darauf basierend zu sortieren, ob das zerkleinerte Stück in den Schlitzabschnitt (32) gefallen ist oder nicht,
oder wobei
die Vorsortiereinheit (30) konfiguriert ist, um dem zerkleinerten Stück zu ermöglichen, sich entlang des Neigungsabschnitts (35) zu bewegen, so dass das zerkleinerte Stück eine Geschwindigkeitskomponente in der Neigungsbreitenrichtung aufweist, und das zerkleinerte Stück darauf basierend zu sortieren, wo das zerkleinerte Stück in der Neigungsbreitenrichtung positioniert ist, nachdem es sich entlang des Neigungsabschnitts (35) bewegt hat.

**12.** Sortierverfahren zum Sortieren eines zerkleinerten Metallstücks entsprechend einem Additivmetallgehaltsanteil in dem zerkleinerten Stück, wobei das Verfahren umfasst:

einen Erfassungsschritt zum Erfassen von Oberflächeninformationen, die Informationen über eine Oberflächenform des zerkleinerten Stücks sind;
einen Bildverarbeitungsschritt zum Berechnen eines Faltenanteils, der ein Prozentanteil eines Abschnitts ist, in dem Falten in einer Oberfläche des zerkleinerten Stücks erzeugt werden, basierend auf den in dem Erfassungsschritt erfassten Oberflächeninformationen; und
einen Sortierschritt zum Sortieren des zerkleinerten Stücks, basierend auf dem in dem Bildverarbeitungsschritt detektierten Faltenanteil,

**dadurch gekennzeichnet, dass:**

der Erfassungsschritt als die Oberflächeninformation Höheninformation erfasst, die eine Höhe anzeigen, die einer Position einer Oberfläche des zerkleinerten Stücks entspricht;
der Erfassungsschritt die Höheninformationen des auf einer Messoberfläche platzierten zerkleinerten Stücks erfasst und
der Bildverarbeitungsschritt den Faltenanteil in einem Abschnitt des zerkleinerten Stücks unter Ausschluss einer Grenze zur Messoberfläche berechnet.

**13.** Sortierverfahren zum Sortieren eines zerkleinerten Metallstücks entsprechend einem Additivmetallgehaltsanteil in dem zerkleinerten Stück, wobei das Verfahren umfasst:

einen Erfassungsschritt zum Erfassen von Oberflächeninformationen, die Informationen über eine Oberflächenform des zerkleinerten Stücks sind;
einen Bildverarbeitungsschritt zum Berechnen eines Faltenanteils, der ein Prozentanteil eines Abschnitts ist, in dem Falten in einer Oberfläche des zerkleinerten Stücks erzeugt werden, basierend auf den in dem Erfassungsschritt erfassten Oberflächeninformationen; und
einen Sortierschritt zum Sortieren des zerkleinerten Stücks, basierend auf dem in dem Bildverarbeitungsschritt detektierten Faltenanteil,

**dadurch gekennzeichnet, dass:**

die Erfassungseinheit als die Oberflächeninformationen ein oder mehrere äußere Erscheinungsbilder, die eine äußere Erscheinung des zerkleinerten Stücks anzeigen, erfasst durch entweder Aufnehmen eines ersten Bildes des zerkleinerten Stücks gegen Licht, das von einer Rückseite des zerkleinerten Stücks abgestrahlt wird, und Aufnehmen eines zweiten Bildes, wobei Licht auf die Oberfläche des zerkleinerten Stücks abgestrahlt wird, oder durch Aufnehmen des zweiten Bildes; und
der Bildverarbeitungsschritt den Faltenanteil basierend auf einer Verteilung von Helligkeiten in dem zweiten Bild innerhalb eines Berechnungsbereichs detektiert und den Berechnungsbereich als einen Bereich einer vorgegebenen Anzahl von Pixeln innerhalb des gesamten Bereichs zerkleinerter Stücke berechnet, abgeleitet aus einem äußeren Umriss des zerkleinerten Stücks in dem ersten Bild oder dem zweiten Bild.

**Revendications**

**1.** Dispositif de tri (1) permettant de trier une pièce métallique déchiquetée conformément à un pourcentage de teneur en métaux additifs dans la pièce déchiquetée, le dispositif de tri (1) comprenant :

une unité d'acquisition (52, 13) configurée pour acquérir des informations de surface qui sont des informations concernant une forme de surface de la pièce déchiquetée ;
une unité de traitement d'image (24) configurée pour calculer un pourcentage de pli qui est un pourcentage d'une partie où un pli est généré sur une surface de la pièce déchiquetée, en fonction des informations de surface acquises par l'unité d'acquisition (52, 13) ; et
une unité de tri (15) configurée pour trier la pièce déchiquetée en fonction du pourcentage de pli détecté par l'unité de traitement d'image (24),

**caractérisé en ce que**

l'unité d'acquisition (52) est configurée pour acquérir, comme informations de surface, des informations de hauteur indiquant une hauteur correspondant à une position d'une surface de la pièce déchiquetée,

l'unité d'acquisition (52) est configurée pour acquérir les informations de hauteur de la pièce déchiquetée placée sur une surface de mesure, et

l'unité de traitement d'image (24) est configurée pour calculer le pourcentage de pli dans une partie de la pièce déchiquetée à l'exclusion d'une limite avec la surface de mesure.

2. Dispositif de tri (1) selon la revendication 1, dans lequel

l'unité d'acquisition (52) est configurée pour acquérir les informations de hauteur concernant la pièce déchiquetée telle que vue dans une direction, et

en fonction des informations de hauteur, l'unité de traitement d'image (24) est configurée pour calculer une zone de la pièce déchiquetée telle que vue dans la direction, et pour calculer une zone de pli dans la pièce déchiquetée telle que vue dans une direction, pour calculer le pourcentage de pli en fonction des zones.

3. Dispositif de tri (1) selon la revendication 1 ou 2, dans lequel
l'unité de traitement d'image (24) est configurée pour calculer le pourcentage de pli en utilisant une image de plage dont la luminance est réglée conformément à une hauteur d'une surface de la pièce déchiquetée.

4. Dispositif de tri (1) selon l'une quelconque des revendications 1 à 3, dans lequel
l'unité de traitement d'image (24) est configurée pour :

définir une première direction et une seconde direction qui sont le long d'un plan perpendiculaire à une direction de hauteur ;

calculer une première différence qui est une différence entre une hauteur d'une partie cible de détermination et une hauteur d'une partie adjacente à la partie cible de détermination dans la première direction ;

calculer une seconde différence qui est une différence entre la hauteur de la partie cible de détermination et une hauteur d'une partie adjacente à la partie cible de détermination dans la seconde direction ; et

déterminer la présence ou l'absence de pli dans la partie cible de détermination en fonction de la première différence et de la seconde différence,

la partie cible de détermination étant une cible où la présence ou l'absence de pli dans la pièce déchiquetée doit être déterminée.

5. Dispositif de tri (1) selon l'une quelconque des revendications 1 à 4, comprenant :

une unité de transport (12a) conçue pour transporter la pièce déchiquetée ; et

un détecteur de mouvement (53) configuré pour détecter la quantité de mouvement ou de rotation de l'unité de transport (12a) ou d'un élément déplacé d'un seul tenant avec l'unité de transport (12a),

l'unité d'acquisition (52) étant fixée à l'encontre de tout mouvement par rapport à l'unité de transport (12a) et étant configurée pour acquérir les informations de hauteur à un moment déterminé par un résultat de détection obtenu par le détecteur de mouvement (53).

6. Dispositif de tri (1) permettant de trier une pièce métallique déchiquetée conformément à un pourcentage de teneur en métaux additifs dans la pièce déchiquetée, le dispositif de tri (1) comprenant :

une unité d'acquisition (52, 13) configurée pour acquérir des informations de surface qui sont des informations concernant une forme de surface de la pièce déchiquetée ;

une unité de traitement d'image (24) configurée pour calculer un pourcentage de pli qui est un pourcentage d'une partie où un pli est généré sur une surface de la pièce déchiquetée, en fonction des informations de surface acquises par l'unité d'acquisition (52, 13) ; et

une unité de tri (15) configurée pour trier la pièce déchiquetée en fonction du pourcentage de pli détecté par l'unité de traitement d'image (24),

**caractérisé en ce que**

l'unité d'acquisition (13) est configurée pour acquérir, comme informations de surface, une ou plusieurs images d'aspect externe indiquant un aspect externe de la pièce déchiquetée, par : soit la prise d'une première image de la pièce déchiquetée face à la lumière rayonnée à partir d'un côté arrière de la pièce déchiquetée et la prise d'une seconde image dans laquelle la lumière est rayonnée vers la surface de la pièce déchiquetée, ou la prise de la seconde image, et

l'unité de traitement d'image (24) est configurée pour détecter le pourcentage de pli en fonction d'une répartition de luminosités dans la seconde image acquise par l'unité d'acquisition (13) dans une région de calcul,

dans lequel l'unité de traitement d'image (24) est configurée pour calculer la région de calcul en tant que région un nombre prédéterminé de pixels à l'intérieur de la région entière de pièce déchiquetée de la pièce déchiquetée déterminée à partir d'un contour extérieur de la pièce déchiquetée dans la première image ou la seconde image.

**7.** Dispositif de tri (1) selon la revendication 6, dans lequel

l'unité de traitement d'image (24) est configurée pour effectuer un traitement de bord consistant à identifier une région de bord qui est une région où la quantité de changement de luminosité est égale ou supérieure à une valeur prédéterminée dans l'image d'aspect externe acquise par l'unité d'acquisition, et pour détecter le pourcentage de pli en fonction d'un pourcentage de bord qui est un pourcentage d'occurrence de la région de bord dans la pièce déchiquetée dans l'image d'aspect externe, et

l'unité de tri (15) est configurée pour trier la pièce déchiquetée en fonction du pourcentage de bord dans la pièce déchiquetée.

**8.** Dispositif de tri (1) selon la revendication 7, comprenant une ou plusieurs unités d'éclairage (14a, 14b, 14c) qui sont configurées pour rayonner de la lumière vers la pièce déchiquetée, dans lequel

l'unité de traitement d'image (24) est configurée pour calculer une zone de la pièce déchiquetée dans l'image d'aspect externe en fonction de l'image d'aspect externe, et pour détecter le pourcentage de bord en fonction de la zone de la pièce déchiquetée, et

le fait de savoir si au moins l'une des unités d'éclairage (14a, 14b, 14c) est allumée ou non au moment de l'acquisition de l'image d'aspect externe pour une utilisation dans le calcul de la région de bord est différent du fait de savoir si l'unité d'éclairage (14a, 14b, 14c) est allumée ou non au moment de l'acquisition de l'image d'aspect externe pour une utilisation dans le calcul de la zone de la pièce déchiquetée.

**9.** Dispositif de tri selon la revendication 8, dans lequel

les unités d'éclairage (14a, 14b, 14c) comportent au moins une unité d'éclairage de surface (14a, 14b, 14c) qui est configurée pour rayonner de la lumière vers une partie de la pièce déchiquetée, la partie comportant une position dont l'image d'aspect externe doit être acquise par l'unité d'acquisition (13), et

l'unité de traitement d'image (24) est configurée pour détecter le pourcentage de pli en fonction de l'image d'aspect externe que l'unité d'acquisition (13) acquiert pendant un rayonnement de lumière par l'unité d'éclairage de surface (14a, 14b, 14c).

**10.** Dispositif de tri (1) selon l'une quelconque des revendications 1 à 9, comprenant

une unité de pré-tri (30) présentant une partie en pente (31, 35) permettant de trier la pièce déchiquetée, et une unité de pré-tri (30) configurée pour trier la pièce déchiquetée déplacée le long de la partie en pente (31, 35), en fonction d'une différence d'amplitude d'une composante de vitesse de la pièce déchiquetée dans une direction d'inclinaison ou dans une direction de largeur de pente, où la direction d'inclinaison représente une direction dans laquelle la gravité agit sur la partie en pente (31, 35) de l'unité de pré-tri (30), et la direction de largeur de pente représente une direction perpendiculaire à la direction d'inclinaison sur la partie de pente (31, 35), dans lequel après avoir été triée par l'unité de pré-tri (30), la pièce déchiquetée est triée par l'unité d'acquisition (52, 13), l'unité de traitement d'image (24) et l'unité de tri (15).

**11.** Dispositif de tri (1) selon la revendication 10, dans lequel

la partie en pente (31) de l'unité de pré-tri présente une partie fendue (32) qui s'étend sur une plage prédéterminée dans la direction d'inclinaison, et l'unité de pré-tri (30) est configurée pour trier la pièce déchiquetée selon que la pièce déchiquetée est tombée ou non dans la partie fendue (32),

dans lequel

l'unité de pré-tri (30) est configurée pour permettre à la pièce déchiquetée de se déplacer le long de la partie en pente (35) de telle sorte que la pièce déchiquetée présente une composante de vitesse dans la direction de largeur de pente, et pour trier la pièce déchiquetée en fonction de l'endroit où la pièce déchiquetée est positionnée

22

dans la direction de largeur de pente après s'être déplacée le long de la partie en pente (35).

**12.** Procédé de tri permettant de trier une pièce métallique déchiquetée conformément à un pourcentage de teneur en métaux additifs dans la pièce déchiquetée, le procédé comprenant :

une étape d'acquisition consistant à acquérir des informations de surface qui sont des informations concernant une forme de surface de la pièce déchiquetée ;
une étape de traitement d'image consistant à calculer un pourcentage de pli qui est un pourcentage d'une partie où un pli est généré sur une surface de la pièce déchiquetée, en fonction des informations de surface acquises lors de l'étape d'acquisition ; et
une étape de tri consistant à trier la pièce déchiquetée en fonction du pourcentage de pli détecté lors de l'étape de traitement d'image,

**caractérisé en ce que :**

l'étape d'acquisition consiste à acquérir, en guise d'informations de surface, des informations de hauteur indiquant une hauteur correspondant à une position d'une surface de la pièce déchiquetée ;
l'étape d'acquisition consiste à acquérir les informations de hauteur de la pièce déchiquetée placée sur une surface de mesure, et
l'étape de traitement d'image consiste à calculer le pourcentage de pli dans une partie de la pièce déchiquetée à l'exclusion d'une limite avec la surface de mesure.

**13.** Procédé de tri permettant de trier une pièce métallique déchiquetée conformément à un pourcentage de teneur en métaux additifs dans la pièce déchiquetée, le procédé comprenant :

une étape d'acquisition consistant à acquérir des informations de surface qui sont des informations concernant une forme de surface de la pièce déchiquetée ;
une étape de traitement d'image consistant à calculer un pourcentage de pli qui est un pourcentage d'une partie où un pli est généré sur une surface de la pièce déchiquetée, en fonction des informations de surface acquises lors de l'étape d'acquisition ; et
une étape de tri consistant à trier la pièce déchiquetée en fonction du pourcentage de pli détecté lors de l'étape de traitement d'image,

**caractérisé en ce que :**

l'étape d'acquisition consiste à acquérir, en guise d'informations de surface, une ou plusieurs images d'aspect externe indiquant un aspect externe de la pièce déchiquetée, par : soit la prise d'une première image de la pièce déchiquetée face à la lumière rayonnée à partir d'un côté arrière de la pièce déchiquetée et la prise d'une seconde image dans laquelle la lumière est rayonnée vers la surface de la pièce déchiquetée, ou la prise de la seconde image ; et
l'étape de traitement d'image consiste à détecter le pourcentage de pli en fonction d'une répartition de luminosités dans la seconde image au sein d'une région de calcul, et à calculer la région de calcul en guise de région un nombre prédéterminé de pixels à l'intérieur de la région entière de pièce déchiquetée de la pièce déchiquetée déterminée à partir d'un contour externe de la pièce déchiquetée dans la première image ou la seconde image.

Fig.1

Fig.2

width direction

conveyance direction

height direction

Fig.3

(a)

```
                    ( START )
                        │
                        ▼
        ┌───────────────────────────────┐
        │  Acquire or create range image │────── S101
        └───────────────────────────────┘
                        │
                        ▼
   ┌─────────────────────────────────────────┐
   │ Perform second-order differential process │────── S102
   │    on range image, to emphasize wrinkle   │
   └─────────────────────────────────────────┘
                        │
                        ▼
   ┌─────────────────────────────────────────┐
   │ Perform binarization process on range image │────── S103
   └─────────────────────────────────────────┘
                        │
                        ▼
   ┌─────────────────────────────────────────┐
   │ Assign ID to each shredded piece, and store it │────── S104
   │    in association with area and perimeter  │
   └─────────────────────────────────────────┘
                        │
                        ▼
   ┌─────────────────────────────────────────────┐
   │ Calculate wrinkle percentage in each shredded piece │────── S105
   │  based on emphasized wrinkle, area, and perimeter   │
   └─────────────────────────────────────────────┘
```

(b)

```
              ( START )
                  │
                  ▼
            ╱───────────╲
           ╱  Wrinkle    ╲     No
          ╱  percentage   ╲─────────────┐
          ╲  ≧Threshold ?  ╱── S110      │
           ╲             ╱               │
            ╲───────────╱                │
                  │ Yes                  │
                  ▼                      ▼
        ┌──────────────────┐   ┌──────────────────────┐
        │ Operate sorting unit │   │ Not operate sorting unit │
        └──────────────────┘   └──────────────────────┘
              S111                      S112
```

Fig.4

CONVEYANCE DIRECTION

LASER IMAGE

HIGH

SECOND
LUMINANCE

FIRST
LUMINANCE

(3)    (4)

(1)    (2)

LUMINANCE

LOW

IDENTIFIED POSITION OF LASER BEAM

Fig.5

|       | i-1 | i   | i+1 |
|-------|-----|-----|-----|
| j-1   | -1  | -1  | -1  |
| j     | -1  | 8   | -1  |
| j+1   | -1  | -1  | -1  |

| | |
|---|---|
| ▨ | focused pixel |
| ☐ | surrounding pixel |

g(i,j)= - f(i-1,j-1) - f(i-1,j) - f(i-1,j+1)
       - f(i,j-1) - f(i,j+1)
       - f(i+1,j-1) - f(i+1,j) - f(i+1,j+1) + 8f(i,j)

f(i,j) = luminance of pixel (i, j) (in range image) before conversion
g(i,j) = luminance of pixel (i, j) after conversion

## Fig.6

range image (Mn content: low)

differential image (Mn content: low)

range image (Mn content: high)

differential image (Mn content: high)

## Fig.7

range image

binary image

Fig.8

Fig.9

(a)

START

Acquire 2D image (first image) with upper-surface lighting unit OFF, side-surface lighting unit OFF, and lower-surface lighting unit ON — S201

Acquire 2D image (second image) with upper-surface lighting unit ON, side-surface lighting unit ON, and lower-surface lighting unit OFF — S202

Calculate computation region based on first image — S203

Perform edge processing on computation region in second image — S204

Calculate edge percentage (= edge region / computation region) — S205

(b)

START

Edge percentage ≧Threshold ? — S210

No

Yes

Operate sorting unit — S211

Not operate sorting unit — S212

Fig.10

External appearance image of
shredded piece with lighting
by lower-surface lighting unit (first image)

Entire shredded piece region (outer contour)
and computation region (inner contour)

Fig.11

External appearance image of shredded piece
with lighting by upper-surface lighting unit
and side-surface lighting unit (second image)

Image resulting from edge processing
performed on computation region

Fig. 12

Image resulting from edge processing
(much wrinkle)

Image resulting from edge processing
(less wrinkle)

Fig.13

SECOND EMBODIMENT

14b ⌐13
14a
12a ◇ ◇~14b

~14c

When first image is acquired

14b ⌐13
14a
12a ◇ ◇~14b

~14c

When second image is acquired

FIRST VARIATION

14b ⌐13
14a
12a ◇ ◇~14b

When first image is acquired

14b ⌐13
14a
12a ◇ ◇~14b

When second image is acquired

SECOND VARIATION

No acquisition of first image

⌐13
14a
12a

When second image is acquired

Fig.14

| PLATED? | Mn PERCENTAGE REFERENCE | MARK |
|---------|------------------------|------|
| Yes | Low(Mn%≦α) | □ |
| | High(Mn%>α) | △ |

Fig.15

| PLATED? | Mn PERCENTAGE REFERENCE | MARK |
|---------|------------------------|------|
| No | Low(Mn%≦α) | ○ |
| | High(Mn%>α) | ◇ |

Fig.16

(a)

inclination direction

30

41

32

31

(b)

inclination direction

30

32

42

31

Fig.17

(a)

(b)

Fig.18

(a)

35

30

inclination direction

slope width direction

36

41

(b)

35

30

inclination direction

slope width direction

36

42

Fig.19

(a)

(b)

**EP 3 517 933 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003171729 A
- JP 2016118475 A